# EUROPEAN PATENT SPECIFICATION

(11) **EP 3 765 894 B1**
(45) Date of publication and mention of the grant of the patent: **16.08.2023**
(21) Application number: 18855168.3
(22) Date of filing: 19.10.2018
(51) Int. Cl.: G02F 1/1335, G02F 1/29, G02F 1/31, G02F 1/13357

(54) **DISPLAY PANEL, DISPLAY APPARATUS, AND METHOD OF DRIVING DISPLAY PANEL**
ANZEIGETAFEL, ANZEIGEVORRICHTUNG UND VERFAHREN ZUR ANSTEUERUNG DER ANZEIGETAFEL
PANNEAU D'AFFICHAGE, APPAREIL D'AFFICHAGE ET PROCÉDÉ DE COMMANDE DE PANNEAU D'AFFICHAGE

(30) Priority: 12.03.2018 CN 201810201792
(43) Date of publication of application: 20.01.2021
(73) Proprietor: BOE TECHNOLOGY GROUP CO., LTD., Beijing 100015 (CN)
(72) Inventor: WANG, Haiyan, Beijing 100176 (CN)
(74) Representative: AWA Sweden AB
(86) International application number: PCT/CN2018/111017
(87) International publication number: WO 2019/174231

(56) References cited:
- CN-A- 102 768 448
- CN-A- 105 741 804
- CN-A- 106 526 993
- CN-A- 107 367 882
- CN-A- 107 450 211
- CN-A- 107 632 451
- CN-A- 108 415 190
- CN-U- 204 807 880
- US-A1- 2012 105 750
- US-A1- 2014 055 716
- US-A1- 2015 279 302
- US-A1- 2017 171 540
- US-B1- 7 012 755

## Description

### Field

The present invention relates to display technology, more particularly, to a display panel, a display apparatus, and a method of driving a display panel thereof.

### Background

In present, most of the liquid crystal display panel comprises polarizers, color filters, liquid crystal layers, TFT array substrates and backlights. Only a small percentage of the incident light emitted by a backlight transmits through all layers of a liquid crystal display panel.

US2017/171540A1 discloses a stereoscopic imaging apparatus and method, a display, and a terminal. A stereoscopic imaging apparatus (100) includes: a display panel (110), including a pixel array and configured to display images; and at least two lens layers (120, 130), disposed in a position corresponding to the pixel array, and configured to alternately deflect, according to applied time-multiplexing electric fields, light rays of the images displayed by all pixels (111 to 116) in the pixel array to at least four different projection directions, where a deflection angle corresponding to the at least four different projection directions is a sum of deflection angles of all of the at least two lens layers (120, 130), so that multiple persons can simultaneously view a three-dimensional stereoscopic image.

US2015/279302A1 discloses a pixel structure including a first electrode layer, a second electrode layer and a liquid crystal layer. The firs electrode layer includes a plurality of first electrodes and a plurality of second electrodes, wherein the first electrodes are used for receiving a first driving voltage, and the second electrodes are used for receiving a second driving voltage. The second electrode layer includes a plurality of third electrodes and a plurality of fourth electrodes, wherein the third electrodes are used for receiving a third driving voltage, and the fourth electrodes are used for receiving a fourth driving voltage. The Liquid crystal layer is disposed between the first electrode layer and the second electrode layer. The first electrodes and the second electrodes are alternately disposed along a first direction parallel to the liquid crystal layer, and the third electrodes and the fourth electrodes are alternately disposed along the first direction.

CN107632451A discloses a display panel, a display device and a display method. A first light shield layer and an optical grating layer are arranged on a first substrate to form an array substrate of a display panel; a second light shield layer and a lens structure layer are arranged on a second substrate to form an opposite substrate of the display panel; a groove which sinks toward the second substrate is formed in the lens structure layer; the first light shield layer comprises a first light shield area and a first gap area which are arranged at intervals; the first gap area is positioned in an orthographic projection in which the groove is formed in the first light shield layer; the second light shield layer comprises a second light shield area and a second gap area which are arranged at intervals; a projection of a vertex of an arc surface of the groove on the second light shield area is positioned in the second light shield area. The light shield layers are both arranged on the upper substrate and the lower substrate, and the positions of the light shield layers are designed, by cooperating with a liquid crystal layer, the optical grating layer and the lens structure layer, modulation on light ray propagation directions is realized, so that a display function is realized; the arrangement of a polarizer sheet is not needed, so that the cost is low, a structure is simple, the transmission rate of light rays is high, and the dependability of the display device is improved.

US2012/105750A1 discloses an image display device includes a display panel displaying an image and a diffractive device. The diffractive device operates in a 2D mode to enable perception of a 2D image from the image of the display panel and in a 3D mode to enable perception of the image of the display panel as a 3D image. The diffractive device includes a plurality of unit devices. When the diffractive device operates in 3D mode, at least one of the plurality of unit devices operates in a lens mode and a barrier mode during different periods.

US2014/055716A1 discloses a liquid-crystal-lens type light-modulating apparatus and a liquid crystal display having the same. The liquid-crystal-lens type light-modulating apparatus comprises: a first light-transmissive substrate, with a first electrode layer and a first alignment layer being provided sequentially on an upper surface thereof; a second light-transmissive substrate located over the first substrate, with a second electrode layer and a second alignment layer being provided sequentially on a lower surface thereof; and liquid crystal sandwiched between the first and second alignment layers, wherein at least one from the first and second electrode layers is formed as a patterned electrode, and the patterned electrode comprises: a plurality of electrode light-transmissive regions and a plurality of light-shielding regions, arranged at an interval therebetween; and the liquid-crystal-lens type light-modulating apparatus further comprises a shielding sheet provided above the second substrate, and the shielding sheet comprises: a plurality of shielding sheet light-transmissive regions and a plurality of shielding sheet light-shielding regions, arranged at an interval therebetween; and each of the shielding sheet light-shielding regions is located over one of the electrode regions in the patterned electrode, and has an area less than the area of an electrode region corresponding to it.

CN107450211A discloses a gray scale control structure which comprises a first substrate, a light extraction layer, an electrode layer, a liquid crystal layer, a filter layer and a second substrate which are sequentially arranged in a laminating mode. A plurality of side-by-side strip electrodes are arranged in the electrode layer, so that a lens unit can be formed in the liquid crystal layer; the filter layer comprises a light emergence strip and a black matrix which are arranged side by side; the light emergence strip is opposite to the lens unit; a light extraction grating is arranged in the light extraction layer; the light extraction grating is opposite to the light emergence strip; the projection of the light emergence strip on the light extraction layer covers the light extraction grating. The gray scale controls the size of a gray scale by regulating and controlling a deflection direction of incident light, meanwhile, can improve light transmittance, and has a high contrast ratio.

### SUMMARY

The invention is set out by the appended set of claims.

In one aspect, the present invention provides a display panel having a plurality of subpixels, comprising a first base substrate; a second base substrate facing the first base substrate; a liquid crystal layer between the first base substrate and the second base substrate; a plurality of first electrode groups respectively in the plurality of subpixels and on a side of the first base substrate facing the liquid crystal layer, and configured to generate a first fringe electric field to form a first liquid crystal lens in a respective one of the plurality of subpixels in the liquid crystal layer; and a plurality of second electrode groups respectively in the plurality of subpixels and on a side of the second base substrate facing the liquid crystal layer, and configured to generate a second fringe electric field to form a second liquid crystal lens in a respective one of the plurality of subpixels in the liquid crystal layer.

Optionally, the first liquid crystal lens in the respective one of the plurality of subpixels is a convex lens protruding along a direction from the first base substrate to the second base substrate; and the second liquid crystal lens in the respective one of the plurality of subpixels is a convex lens protruding along a direction from the second base substrate to the first base substrate,

Optionally, a main optical axis of the first liquid crystal lens and a main optical axis of the second liquid crystal lens are co-linear.

Optionally, a focal point of the first liquid crystal lens coincides with a focal point of the second liquid crystal lens.

Optionally, a main optical axis of the first liquid crystal lens is substantially perpendicular to the first base substrate; and a main optical axis of the second liquid crystal lens is substantially perpendicular to the second base substrate.

Optionally, the first liquid crystal lens is symmetrical with respect to a main optical axis of the first liquid crystal lens; and the second liquid crystal lens is symmetrical with respect to a main optical axis of the second liquid crystal lens.

Optionally, each of the plurality of first electrode groups in a respective one of the plurality of subpixels comprises a first sub-electrode on a side of the first base substrate facing the liquid crystal layer; a first insulating layer on a side of the first sub-electrode distal to the first base substrate; and a plurality of second sub-electrodes on a side of the first insulating layer distal to the first sub-electrode; wherein each of the plurality of second electrode groups in the respective one of the plurality of subpixels comprises a third sub-electrode on a side of the second base substrate facing the liquid crystal layer; a second insulating layer on a side of the third sub-electrode distal to the second base substrate; and a plurality of fourth sub-electrodes on a side of the second insulating layer distal to the third sub-electrode; wherein an orthographic projection of the first sub-electrode on the first base substrate substantially covers orthographic projections of the plurality of second sub-electrodes on the first base substrate; and an orthographic projection of the third sub-electrode on the second base substrate substantially covers orthographic projections of the plurality of fourth sub-electrodes on the second base substrate.

Optionally, a total number of the plurality of second sub-electrodes in each of the plurality of subpixels is an odd number; and a total number of the plurality of fourth sub-electrodes in each of the plurality of subpixels is an odd number.

Optionally, the display panel has a first aperture extending through the third sub-electrode in each of the plurality of subpixels; and an orthographic projection of a central most sub-electrode of the plurality of fourth sub-electrodes on the third sub-electrode covers the first aperture.

Optionally, a ratio of a width of the first aperture to a width of the central most sub-electrode of the plurality of fourth sub-electrodes is in a range of 1:10 to 4:5.

The display panel further comprises a black matrix defining a plurality of second apertures; and a color filter between the second base substrate and the plurality of second electrode groups, and comprising a plurality of color filter blocks respectively in the plurality of second apertures; wherein an orthographic projection of the second liquid crystal lens in each of the plurality of subpixels on the second base substrate covers orthographic projections of N numbers of color filter blocks of the plurality of color filter blocks, N is an even integer; and, optionally, an orthographic projection of a part of the black matrix at a central position with respect to the N numbers of color filter blocks of the plurality of color filter blocks on the second base substrate covers an orthographic projection of the central most sub-electrode of the plurality of fourth sub-electrodes on the second base substrate.

Optionally, the plurality of color filter blocks are made of quantum dots.

Optionally, the display panel further comprises a light collimator on a side of the liquid crystal layer distal to the second base substrate, and configure to collimate incident light into substantially collimated light; wherein the orthographic projection of the part of the black matrix at the central position with respect to the N numbers of color filter blocks of the plurality of color filter blocks on the first base substrate covers an orthographic projection of the light collimator on the first base substrate.

Optionally, a ratio of a diameter of the second liquid crystal lens to a diameter of the first liquid crystal lens is in a range of 6:1 to 3:1.

Optionally, the diameter of the first liquid crystal lens is in a range of approximately 9 µm to approximately 17 µm.

In another aspect, the present invention provides a display apparatus, comprising the display panel described herein or fabricated by a method described herein, and one or more integrated driving circuits.

In another aspect, the present invention provides a method of driving a display panel having a plurality of subpixels, wherein the display panel comprises a first base substrate; a second base substrate facing the first base substrate; and a liquid crystal layer between the first base substrate and the second base substrate; the method comprises generating a first fringe electric field to form a first liquid crystal lens in each of the plurality of subpixels in the liquid crystal layer by applying a first voltage level to a plurality of first electrode groups respectively in the plurality of subpixels and on a side of the first base substrate facing the liquid crystal layer; and generating a second fringe electric field to form a second liquid crystal lens in each of the plurality of subpixels in the liquid crystal layer by applying a second voltage level to a plurality of second electrode groups respectively in the plurality of subpixels and on a side of the second base substrate facing the liquid crystal layer.

Optionally, the method further comprises adjusting a grayscale of one of the plurality of subpixels by changing one or a combination of the first voltage level and the second voltage level, thereby changing one or a combination of a first curvature of the first liquid crystal lens and a second curvature of the second liquid crystal lens in a same subpixel of the plurality of subpixels.

Optionally, focal points of the first liquid crystal lens and the second liquid crystal lens are maintained coincided during adjusting the grayscale.

Optionally, each of the plurality of first electrode groups in a respective one of the plurality of subpixels comprises a first sub-electrode on a side of the first base substrate facing the liquid crystal layer; a first insulating layer on a side of the first sub-electrode distal to the first base substrate; and a plurality of second sub-electrodes on a side of the first insulating layer distal to the first sub-electrode; wherein each of the plurality of second electrode groups in the respective one of the plurality of subpixels comprises a third sub-electrode on a side of the second base substrate facing the liquid crystal layer; a second insulating layer on a side of the third sub-electrode distal to the second base substrate; and a plurality of fourth sub-electrodes on a side of the second insulating layer distal to the third sub-electrode; wherein an orthographic projection of the first sub-electrode on the first base substrate substantially covers orthographic projections of the plurality of second sub-electrodes on the first base substrate; and an orthographic projection of the third sub-electrode on the second base substrate substantially covers orthographic projections of the plurality of fourth sub-electrodes on the second base substrate; wherein a voltage level at the first sub-electrode is maintained substantially same as a voltage level at a central most sub-electrode of the plurality of second sub-electrodes; a voltage level at the third sub-electrode is maintained substantially same as a voltage level at a central most sub-electrode of the plurality of fourth sub-electrodes; voltage levels respectively at the plurality of second sub-electrodes increase, in stepwise increments, from the central most sub-electrode of the plurality of second sub-electrodes to outermost sub-electrodes of the plurality of second sub-electrodes on two sides, respectively; and voltage levels respectively at the plurality of fourth sub-electrodes increase, in stepwise increments, from the central most sub-electrode of the plurality of fourth sub-electrodes to outermost sub-electrodes of the plurality of fourth sub-electrodes on two sides, respectively.

Optionally, adjusting the grayscale comprises increasing the grayscale of the one of the plurality of subpixels by increasing each increment of the stepwise increments of the voltage levels respectively at the plurality of second sub-electrodes from the central most sub-electrode of the plurality of second sub-electrodes to the outermost sub-electrodes of the plurality of second sub-electrodes on two sides, respectively.

Optionally, adjusting the grayscale comprises increasing the grayscale of the one of the plurality of subpixels by increasing each increment of the stepwise increments of the voltage levels respectively at the plurality of fourth sub-electrodes from the central most sub-electrode of the plurality of fourth sub-electrodes to the outermost sub-electrodes of the plurality of fourth sub-electrodes on two sides, respectively.

Optionally, adjusting the grayscale comprises decreasing the grayscale of the one of the plurality of subpixels by decreasing each increment of the stepwise increments of the voltage levels respectively at the plurality of second sub-electrodes from the central most sub-electrode of the plurality of second sub-electrodes to the outermost sub-electrodes of the plurality of second sub-electrodes on two sides, respectively.

Optionally, adjusting the grayscale comprises decreasing the grayscale of the one of the plurality of subpixels by decreasing each increment of the stepwise increments of the voltage levels respectively at the plurality of fourth sub-electrodes from the central most sub-electrode of the plurality of fourth sub-electrodes to the outermost sub-electrodes of the plurality of fourth sub-electrodes on two sides, respectively.

Optionally, voltage levels of the central most sub-electrode of the plurality of second sub-electrodes and the central most sub-electrode of the plurality of fourth sub-electrodes in the respective one of the plurality of subpixels are substantially same.

### BRIEF DESCRIPTION OF THE DRAWINGS

The following drawings are merely examples for illustrative purposes according to various disclosed embodiments and are not intended to limit the scope of the present invention.
FIG. 1 is a schematic diagram illustrating light transmission rates of various parts of a display panel having a plurality of subpixels in a relevant art.
FIG. 2 is a schematic diagram illustrating a structure of a display panel having a plurality of subpixels in some embodiments according to the present disclosure.
FIG. 3 is a schematic diagram illustrating a structure of a display panel having a plurality of subpixels in some embodiments according to the present disclosure.
FIG. 4 is a schematic diagram illustrating a structure of a display panel having a plurality of subpixels in some embodiments according to the present disclosure.
FIG. 5 is a schematic diagram illustrating a structure of a display panel having a plurality of subpixels in some embodiments according to the present disclosure.
FIG. 6 is a schematic diagram illustrating a structure of a display panel having a plurality of subpixels in some embodiments according to the present disclosure.
FIG. 7 is a schematic diagram illustrating a structure of a display panel having a plurality of subpixels in some embodiments according to the present disclosure.
FIG. 8 is a schematic diagram illustrating a structure of a display panel having a plurality of subpixels in some embodiments according to the present disclosure.
FIG. 9 is a schematic diagram illustrating a structure of a display panel having a plurality of subpixels in some embodiments according to the present disclosure.
FIG. 10 is a schematic diagram illustrating a structure of a display panel having a plurality of subpixels in some embodiments according to the present disclosure.
FIG. 11 is a schematic diagram illustrating a structure of a display panel having a plurality of subpixels in some embodiments according to the present disclosure.
FIG. 12 is a schematic diagram illustrating a structure of a display panel having a plurality of subpixels in some embodiments according to the present disclosure.
FIG. 13 is a schematic diagram illustrating a structure of a display panel having a plurality of subpixels in some embodiments according to the present disclosure.
FIG. 14 is a schematic diagram illustrating a structure of a display panel having a plurality of subpixels in some embodiments according to the present disclosure.
FIG. 15 is a schematic diagram illustrating a structure of a display panel having a plurality of subpixels in some embodiments according to the present disclosure.
FIG. 16 is a schematic diagram illustrating a structure of a display panel having a plurality of subpixels in some embodiments according to the present disclosure.

### DETAILED DESCRIPTION

The disclosure will now be described more specifically with reference to the following embodiments. It is to be noted that the following descriptions of some embodiments are presented herein for purpose of illustration and description only. It is not intended to be exhaustive or to be limited to the precise form disclosed.

A light transmission rate of a display panel comprising two polarizers is approximately 5%, and the display panel consumes relatively high energy and has a relatively low energy utilization rate.

Accordingly, the present disclosure provides, inter alia, a display panel, a display apparatus, and a method of driving a display panel thereof that substantially obviate one or more of the problems due to limitations and disadvantages of the related art. In one aspect, the present disclosure provides a display panel having a plurality of subpixels. In some embodiments, the display panel having a plurality of subpixels comprises a first base substrate; a second base substrate facing the first base substrate; a liquid crystal layer between the first base substrate and the second base substrate; a plurality of first electrode groups respectively in the plurality of subpixels and on a side of the first base substrate facing the liquid crystal layer, and configured to generate a first fringe electric field to form a first liquid crystal lens in a respective one of the plurality of subpixels in the liquid crystal layer; and a plurality of second electrode groups respectively in the plurality of subpixels and on a side of the second base substrate facing the liquid crystal layer, and configured to generate a second fringe electric field to form a second liquid crystal lens in a respective one of the plurality of subpixels in the liquid crystal layer. The present disclosure increases the light transmission rate of the display panel having the plurality of subpixels, increase the light utilization rate, and improve the display quality of the display panel having the plurality of subpixels.

As used herein, the term "fringe electric field" denotes an electric field that occupies a space not directly between two conductors or between two electrodes; i.e., as is well known in relevant art, its electric field lines may curvedly distribute in a fringe region of the two conductors, rather than distributing linearly in a space directly between the two conductors. In comparison, the term "direct electric field" denotes an electric field in a space directly between two conductors or between two electrodes.

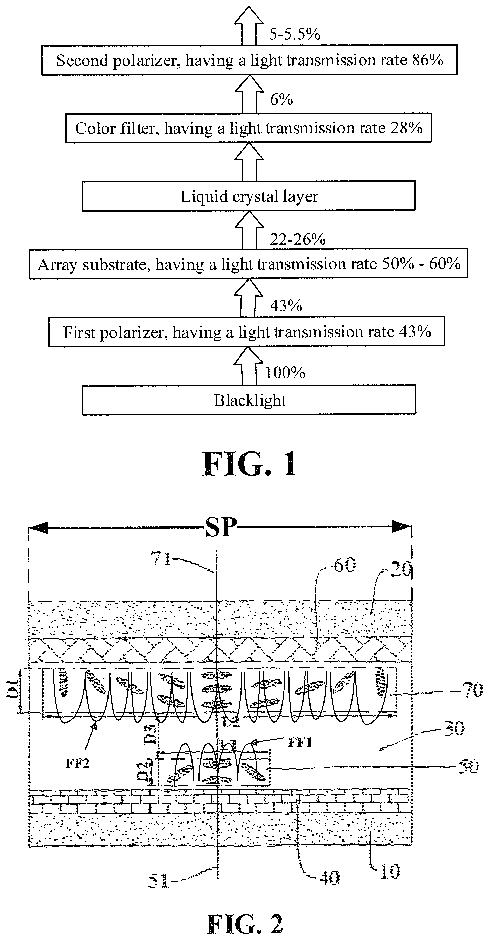

FIG. 1 is a schematic diagram illustrating light transmission rates of different parts of a display panel having a plurality of subpixels in a relevant art. Referring to FIG. 1, since each layer of the display panel may cause an optical loss of a portion of light as illustrated, a percentage of light fails to transmit through all layers of a display panel having a plurality of subpixels, and a final light transmission rate of a display panel having a plurality of subpixels is approximately 5.5 %. In some embodiments, a display panel having a plurality of subpixels comprises a backlight, a first polarizer having a light transmission rate 43%, an array substrate having a light transmission rate 50%-60%, a liquid crystal layer, a color filter having a light transmission rate 28%, and a second polarizer having a light transmission rate 86%. The light transmission rates of the first polarizer, the second polarizer, and the color filter are relatively low.

FIG. 2 is a schematic diagram illustrating a structure of a display panel having a plurality of subpixels Sp in some embodiments according to the present disclosure. Referring to FIG. 2, in some embodiments, a display panel having a plurality of subpixels Sp comprises a first base substrate 10; a second base substrate 20 facing the first base substrate; a liquid crystal layer 30 between the first base substrate 10 and the second base substrate 20; a plurality of first electrode groups 40 respectively in the plurality of subpixels Sp and on a side of the first base substrate 10 facing the liquid crystal layer 30, and configured to generate a first fringe electric field FF1 to form a first liquid crystal lens 50 in a respective one of the plurality of subpixels Sp in the liquid crystal layer; and a plurality of second electrode groups 60 respectively in the plurality of subpixels Sp and on a side of the second base substrate 20 facing the liquid crystal layer 30, and configured to generate a second fringe electric field FF2 to form a second liquid crystal lens 70 in a respective one of the plurality of subpixels Sp in the liquid crystal layer 30. Optionally, the first liquid crystal lens 50 in the respective one of the plurality of subpixels Sp is a convex lens protruding along a direction from the first base substrate 10 to the second base substrate 20. Optionally, the second liquid crystal lens 70 in the respective one of the plurality of subpixels Sp is a convex lens protruding along a direction from the second base substrate 20 to the first base substrate 10. Optionally, an orthographic projection of the second liquid crystal lens 70 on the first base substrate 10 covers an orthographic projection of the first liquid crystal lens 50 on the first base substrate 10. Optionally, a diameter L1 of the first liquid crystal lens 50 is smaller than a diameter L2 of the second liquid crystal lens 70.

In some embodiments, the first liquid crystal lens 50 is on a side of the second liquid crystal lens 70 distal to the second base substrate 20; and the second liquid crystal lens 70 is on a side of the first liquid crystal lens 50 distal to the first base substrate 10.

In some embodiments, by individually controlling a voltage applied to one of the plurality of first electrode groups 40 in a respective one of the plurality of subpixels Sp, the first liquid crystal lens 50 in the respective one of the plurality of subpixels Sp is independently controlled. By individually controlling a voltage applied to one of the plurality of second electrode groups 60 in a respective one the plurality of subpixels Sp, the second liquid crystal lens 70 in the respective one of the plurality of subpixels Sp is also independently controlled.

Accordingly, the present disclosure in some embodiments provides a display panel absent of any polarizer on either side of the liquid crystal layer. Optionally, the display panel in the present disclosure is absent of any polarizer. The first liquid crystal lens 50 and the second liquid crystal lenses 70 in the respective one of the plurality of subpixels Sp are used instead of the polarizers in relevant art to adjust a grayscale of the respective one of the plurality of subpixels Sp. As such, the effect of the polarizer with a low light transmission rate is eliminated. A light transmission rate of a display panel having the plurality of subpixels Sp having the first liquid crystal lens 50 and the second liquid crystal lens 70 is significantly enhanced as compared to relevant display panels having polarizers, and the image display quality of the display panel having the plurality of subpixels Sp having the first liquid crystal lens 50 and the second liquid crystal lens 70 is improved.

In some embodiments, the orthographic projection of the second liquid crystal lens 70 on the first base substrate 10 covers the orthographic projection of the first liquid crystal lens 50 on the first base substrate 10, and optionally the diameter L1 of the first liquid crystal lens 50 is smaller than the diameter L2 of the second liquid crystal lens 70. As such, all the light converged by the first liquid crystal lens 50 in the respective one of the plurality of subpixels Sp may be transmitted completely into the second liquid crystal lenses 70 in the respective one of the plurality of subpixels Sp. The light utilization rate is increased.

Various appropriate materials may be used for making the first base substrate 10 and the second base substrate 20. Examples of materials suitable for making the first base substrate 10 and the second base substrate 20 comprise polymer substrates, metal material substrates, and glass substrates.

Various appropriate materials may be used for making the liquid crystal layer 30. Examples of materials suitable for making liquid crystal layer 30 comprise nematic liquid crystal, smectic liquid crystal, and cholesteric liquid crystal.

In some embodiments, a main optical axis 51 of the first liquid crystal lens 50 and a main optical axis 71 of the second liquid crystal lens 70 are co-linear. The first liquid crystal lens 50 can converge light onto the second liquid crystal lens 70, and the light converged by the first liquid crystal lens 50 is uniformly transmitted to the second liquid crystal lens 70. The light utilization rate can be increased, the uniformity of light dispersion can also be increased, and the image display quality of the display panel having the plurality of subpixels Sp can be improved.

In some embodiments, a focal point of the first liquid crystal lens 50 coincides with a focal point of the second liquid crystal lens 70. As such, all incident light can be converged by the first liquid crystal lens 50 onto the second liquid crystal lens 70. All incident light emitted out of the display panel having the plurality of subpixels Sp is parallel with a direction of the main optical axis 51 of the first liquid crystal lens 50 and a direction of the main optical axis 71 of the second liquid crystal lens 70. The light utilization rate can be increased, and color mixing of display panel can be avoided.

In some embodiments, the main optical axis 51 of the first liquid crystal lens 50 is substantially perpendicular to the first base substrate 10; and the main optical axis 71 of the second liquid crystal lens 70 is substantially perpendicular to the second base substrate 20. The incident light converged by the first liquid crystal lens 50 is uniformly transmitted through the second liquid crystal lens 70, and the incident light converged by the second liquid crystal lens 70 is uniformly transmitted out. The light utilization rate can be increased. As used herein, the term "substantially perpendicular" means that an angle is in the range of approximately 45 degrees to approximately 135 degrees, e.g., approximately 85 degrees to approximately 95 degrees, approximately 80 degrees to approximately 100 degrees, approximately 75 degrees to approximately 105 degrees, approximately 70 degrees to approximately 110 degrees, approximately 65 degrees to approximately 115 degrees, approximately 60 degrees to approximately 120 degrees.

In some embodiments, the first liquid crystal lens 50 is symmetrical with respect to the main optical axis 51 of the first liquid crystal lens 50; and the second liquid crystal lens 70 is symmetrical with respect to the main optical axis 71 of the second liquid crystal lens 70. The first liquid crystal lens 50 has a symmetrical structure, and the second liquid crystal lens 70 has a symmetrical structure. Optionally, the main optical axis 51 of the first liquid crystal lens 50 and the main optical axis 71 of the second liquid crystal lens 70 are co-linear. Based on this setting, incident light emitted from the backlight is uniformly transmitted through the first liquid crystal lens 50. Subsequent to the incident light transmitting through the first liquid crystal lens 50, all of the incident light is converged by the first liquid crystal lens 50 and uniformly transmitted through the second liquid crystal lens 70. Subsequent to the incident light transmitting through the second liquid crystal lens 70, all of the incident light is converged by the second liquid crystal lens 70 and uniformly transmitted through a color filter. The light utilization rate is increased, and the image display quality of the display panel having the plurality of subpixels Sp can be improved.

In some embodiments, a ratio of the diameter L2 of the second liquid crystal lens 70 to the diameter L1 of the first liquid crystal lens 50 is in a range of 6:1 to 3:1, e.g. 6:1 to 5:1, 5:1 to 4:1, and 4:1 to 3:1. Incident light is converged by the first liquid crystal lens 50 and transmitted through the second liquid crystal lens 70. The light utilization rate can be increased, the dispersed area of the incident light can be increased. A better resolution of the display panel having the plurality of subpixels Sp can be achieved. In some embodiments, a size of the first liquid crystal lens 50 and a size of the second liquid crystal lens 70 can be determined depending on a resolution of the display panel and other parameters of other parts of the display panel. In some embodiments, the diameter L1 of the first liquid crystal lens 50 is in a range of approximately 9 µm to approximately 17 µm, e.g., approximately 9 µm to approximately 12 µm, approximately 12 µm to approximately 15 µm, and approximately 15 µm to approximately 17 µm. In some embodiments, the diameter L2 of the second liquid crystal lens 70 can be determined depending on the diameter L1 of the first liquid crystal lens 50 and the parameters of the display panel. Optionally, the diameter L2 of the second liquid crystal lens 70 is in a range of approximately 27 µm to approximately 102 µm, e.g., approximately 27 µm to approximately 40 µm, approximately 40 µm to approximately 50 µm, approximately 50 µm to approximately 60 µm, approximately 60 µm to approximately 70 µm, approximately 70 µm to approximately 80 µm, approximately 80 µm to approximately 90 µm, approximately 90 µm to approximately 102 µm.

In some embodiments, a thickness D2 of the first liquid crystal lens 50 and a thickness D1 of the second liquid crystal lens 70 can be determined depending on parameters of the display panel.

In some embodiments, the focal point of the first liquid crystal lens 50 and the focal point of the second liquid crystal lens 70 can be determined depending on parameters and different grayscales of the display panel. In some embodiments, parameters of the focal point of the first liquid crystal lens 50 and the focal point of the second liquid crystal lens 70 can be determined, as long as the grayscale of the display panel having the plurality of subpixels Sp can be controlled by the first liquid crystal lens 50 and the second liquid crystal lens 70.

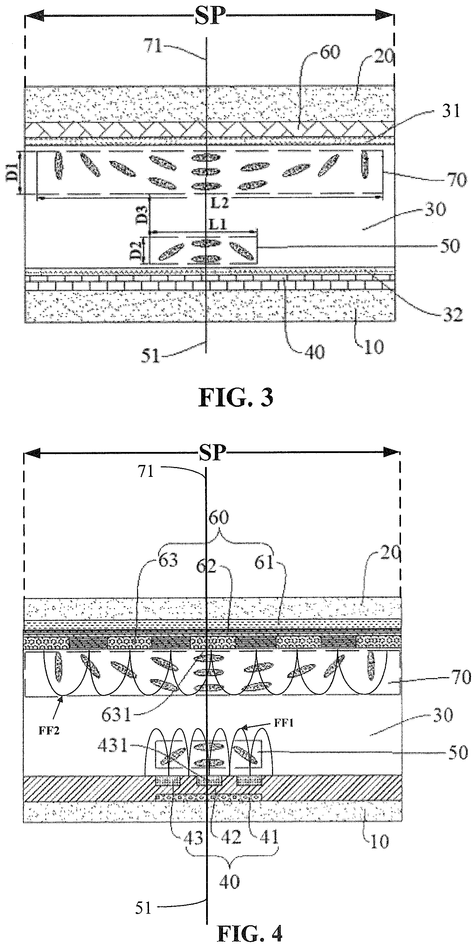

FIG. 3 is a schematic diagram illustrating a structure of a display panel having a plurality of subpixels in some embodiments according to the present disclosure. Referring to FIG. 3, a first alignment layer 32 is disposed on a side of side of the first base substrate 10 facing the liquid crystal layer 30, and a second alignment layer 31 is disposed on a side of the second base substrate 20 the liquid crystal layer 30 facing the liquid crystal layer 30, so as to implement a functionality of alignment of liquid crystal molecules.

In some embodiments, the first liquid crystal lens 50 is induced by adjusting a voltage level applied on a respective one of the plurality of first electrode groups 40 respectively in the plurality of subpixels Sp. The second liquid crystal lens 70 is induced by adjusting a voltage level applied on a respective one of the plurality of second electrode groups 60 respectively in the plurality of subpixels Sp. Optionally, parameters of the plurality of first electrode groups 40 respectively in the plurality of subpixels Sp and the plurality of second electrode groups 60 respectively in the plurality of subpixels Sp can be determined depending on design needs.

FIG. 4 is a schematic diagram illustrating a structure of a display panel having a plurality of subpixels in some embodiments according to the present disclosure. Referring to FIG. 4, in some embodiments, each of the plurality of first electrode groups 40 in a respective one of the plurality of subpixels Sp comprises a first sub-electrode 41 on a side of the first base substrate 10 facing the liquid crystal layer 30; a first insulating layer 42 on a side of the first sub-electrode 41 distal to the first base substrate 10, and covering the first sub-electrode 41; and a plurality of second sub-electrodes 43 on a side of the first insulating layer 42 distal to the first sub-electrode 41. Optionally, an orthographic projection of the first sub-electrode 41 on the first base substrate 10 substantially covers orthographic projections of the plurality of second sub-electrodes 43 on the first base substrate 10. Optionally, different voltages are respectively applied to the first sub-electrode 41 and the plurality of second sub-electrodes 43, there are differences between a voltage level of the first sub-electrode 41 and each voltage level of each of the plurality of second sub-electrodes 43. The first fringe electric field FF1 is generated to form a first liquid crystal lens 50 in a respective one of the plurality of subpixels Sp in the liquid crystal layer 30. The liquid crystal molecules in the liquid crystal layer 30 surrounding the each of the plurality of first electrode groups 40 spin and deflect to form the first liquid crystal lens 50. Optionally, the first liquid crystal lens 50 is a convex lens protruding along a direction from the first base substrate 10 toward the second base substrate 20.

In some embodiments, each of the plurality of second electrode groups 60 in the respective one of the plurality of subpixels Sp comprises a third sub-electrode 61 on a side of the second base substrate 20 facing the liquid crystal layer 30; a second insulating layer 62 on a side of the third sub-electrode 61 distal to the second base substrate 20, and covering the third sub-electrode 61; and a plurality of fourth sub-electrodes 63 on a side of the second insulating layer 62 distal to the third sub-electrode 61. Optionally, an orthographic projection of the third sub-electrode 61 on the second base substrate 20 substantially covers orthographic projections of the plurality of fourth sub-electrodes 63 on the second base substrate 20. Optionally, different voltages are respectively applied to the third sub-electrode 61 and the plurality of fourth sub-electrodes 63, there are differences between a voltage level of the third sub-electrode 61 and each voltage level of each of the plurality of fourth sub-electrodes 63. The second fringe electric field FF2 is generated to form a second liquid crystal lens 70 in a respective one of the plurality of subpixels Sp in the liquid crystal layer 30. The liquid crystal molecules in the liquid crystal layer 30 surrounding the each of the plurality of second electrode groups 60 spin and deflect to form the second liquid crystal lens 70. Optionally, the second liquid crystal lens 70 is a convex lens protruding along a direction from the second base substrate 20 toward the first base substrate 10.

As used herein, the term "substantially covers" means that one object or one orthographic projection being at least 50%, at least 60%, at least 70%, at least 80%, at least 90%, at least 95%, at least 99%, or 100% covered by another orthographic projection.

In some embodiments, the plurality of second sub-electrodes 43 and the plurality of fourth sub-electrodes 63 can have various appropriate arrangements. Optionally, the plurality of second sub-electrodes 43 are evenly distributed and the plurality of the plurality of fourth sub-electrodes 63 are evenly distributed, and the main optical axis 51 of the first liquid crystal lens 50 and the main optical axis 71 of the second liquid crystal lens 70 are co-linear; the main optical axis 51 of the first liquid crystal lens 50 is substantially perpendicular to the first base substrate 10; and the main optical axis 71 of the second liquid crystal lens 70 is substantially perpendicular to the second base substrate 20.

In some embodiments, in order to uniformly transmit incident light and increase the light utilization rate, the first liquid crystal lens 50 is symmetrical with respect to the main optical axis 51 of the first liquid crystal lens 50; and the second liquid crystal lens 70 is symmetrical with respect to the main optical axis 71 of the second liquid crystal lens 70. In some embodiments, in order to render the first liquid crystal lens 50 symmetrical with respect to the main optical axis 51, voltage levels respectively at the plurality of second sub-electrodes 43 increase, in stepwise increments, from a central most sub-electrode 431 of the plurality of second sub-electrodes 43 to outermost sub-electrodes of the plurality of second sub-electrodes 43 on two sides, respectively. The first fringe electric field FF1 is generated to form the first liquid crystal lens 50 in a respective one of the plurality of subpixels Sp in the liquid crystal layer 30. In some embodiments, in order to render the second liquid crystal lens 70 symmetrical with respect to the main optical axis 71, voltage levels respectively at the plurality of fourth sub-electrodes 63 increase, in stepwise increments, from a central most sub-electrode 631 of the plurality of fourth sub-electrodes 63 to outermost sub-electrodes of the plurality of fourth sub-electrodes 63 on two sides, respectively. The second fringe electric field FF2 is generated to form the second liquid crystal lens 70 in the respective one of the plurality of subpixels Sp in the liquid crystal layer 30. The incident light is converged by the first liquid crystal lens 50 and uniformly transmitted to the second liquid crystal lens 70, subsequently, the incident light is in turn converged by the second liquid crystal lens 70 and uniformly transmitted out.

In some embodiments, voltage levels respectively at the plurality of second sub-electrodes 43 increase, in stepwise increments, from a central most sub-electrode 431 of the plurality of second sub-electrodes 43 to outermost sub-electrodes of the plurality of second sub-electrodes 43 on two sides, respectively. Optionally, to be specific, by way of example, first stepwise increments from the central most sub-electrode 431 to a first outermost sub-electrode of the plurality of second sub-electrodes 43 on a first side and second stepwise increments from the central most sub-electrode 431 to a second outermost sub-electrode of the plurality of second sub-electrodes 43 on a second side are symmetrical with respect to each other. In some embodiments, voltage differences respectively between the plurality of second sub-electrodes 43 and the first sub-electrode 41 increase, in stepwise increments, from a central most sub-electrode 431 of the plurality of second sub-electrodes 43 to outermost sub-electrodes of the plurality of second sub-electrodes 43 on two sides, respectively. Optionally, to be specific, by way of example, first stepwise increments of the voltage differences, with respect to the first sub-electrode 41, from the central most sub-electrode 431 to a first outermost sub-electrode of the plurality of second sub-electrodes 43 on a first side and second stepwise increments of the voltage differences, with respect to the first sub-electrode 41, from the central most sub-electrode 431 to a second outermost sub-electrode of the plurality of second sub-electrodes 43 on a second side are symmetrical with respect to each other. By having this design, a degree of spinning and thus a deflection level of each of the liquid crystal molecules surround the respective one of the plurality of first electrode groups 40 increases gradually from the main optical axis to two side, e.g., in a symmetrical fashion, thereby forming a first liquid crystal lens 50 that is symmetrical.

In some embodiments, voltage levels respectively at the plurality of fourth sub-electrodes 63 increase, in stepwise increments, from a central most sub-electrode 631 of the plurality of fourth sub-electrodes 63 to outermost sub-electrodes of the plurality of fourth sub-electrodes 63 on two sides, respectively. Optionally, to be specific, by way of example, first stepwise increments from the central most sub-electrode 631 to a first outermost sub-electrode of the plurality of fourth sub-electrodes 63 on a first side and second stepwise increments from the central most sub-electrode 631 to a second outermost sub-electrode of the plurality of fourth sub-electrodes 63 on a second side are symmetrical with respect to each other. In some embodiments, voltage differences respectively between the plurality of fourth sub-electrodes 63 and the third sub-electrode 61 increase, in stepwise increments, from a central most sub-electrode 631 of the plurality of fourth sub-electrodes 63 to outermost sub-electrodes of the plurality of fourth sub-electrodes 63 on two sides, respectively. Optionally, to be specific, by way of example, first stepwise increments of the voltage differences, with respect to the third sub-electrode 61, from the central most sub-electrode 631 to a first outermost sub-electrode of the plurality of fourth sub-electrodes 63 on a first side and second stepwise increments of the voltage differences, with respect to the third sub-electrode 61, from the central most sub-electrode 631 to a second outermost sub-electrode of the plurality of fourth sub-electrodes 63 on a second side are symmetrical with respect to each other. By having this design, a degree of spinning and thus a deflection level of each of the liquid crystal molecules surround the respective one of the plurality of second electrode groups 60 increases gradually from the main optical axis to two side, e.g., in a symmetrical fashion, thereby forming a second liquid crystal lens 70 that is symmetrical.

In some embodiments, each of the plurality of first electrode group 40 can have various appropriate numbers of the plurality of second sub-electrodes 43 and each of the plurality of second electrode group 60 can have various appropriate numbers of the plurality of fourth sub-electrodes 63; in other words, there are no restrictive requirements on specific numbers of the plurality of second sub-electrodes 43 and specific numbers of the plurality of fourth sub-electrodes 63. Optionally, a diameter L1 of the first liquid crystal lens 50 is smaller than a diameter L2 of the second liquid crystal lens 70. Optionally, the total number of the plurality of fourth sub-electrodes 63 is greater than the total number of the plurality of second sub-electrodes 43. Optionally, in order to improve the symmetry of the first liquid crystal lens 50 and the symmetry of the second liquid crystal lens 70, to increase the light utilization rate, and to increase the uniformity of light dispersion, the total number of the plurality of second sub-electrodes 43 in each of the plurality of subpixels Sp is an odd number, and the total number of the plurality of fourth sub-electrodes 63 in each of the plurality of subpixels Sp is also an odd number. Optionally, the plurality of second sub-electrodes 43 comprises a central most sub-electrode 431 of the plurality of second sub-electrodes 43 disposed in the center of the plurality of second sub-electrodes 43. The plurality of fourth sub-electrodes 63 comprises a central most sub-electrode 631 of the plurality of fourth sub-electrodes 63 disposed in the center of the plurality of fourth sub-electrodes 63. Optionally, the main optical axis of the first liquid crystal lens 50 passes a center position of the central most sub-electrode 431 of the plurality of second sub-electrodes 43, the main optical axis of the second liquid crystal lens 70 passes a center position of the central most sub-electrode 631 of the plurality of fourth sub-electrodes 63. Optionally, the main optical axis of the first liquid crystal lens 50 and the main optical axis of the second liquid crystal lens 70 are co-linear, and both pass the center position of the central most sub-electrode 431 of the plurality of second sub-electrodes 43 and pass the center position of the central most sub-electrode 631 of the plurality of fourth sub-electrodes 63.

In some embodiments, voltage levels at the plurality of first electrode groups 40 and the plurality of second electrode groups 60 can be controlled such that the liquid crystal molecules at positions respectively corresponding to the central most sub-electrode 431 of the plurality of second sub-electrodes 43 and the central most sub-electrode 631 of the plurality of fourth sub-electrodes 63 may not substantially spin. Optionally, to be specific, by way of example, a difference between the voltage level of the first sub-electrode 41 and the voltage level of the central most sub-electrode 431 of the plurality of second sub-electrodes 43 is substantially zero, and a difference between the voltage level of the third sub-electrode 61 and the voltage level of the central most sub-electrode 631 of the plurality of fourth sub-electrodes 63 is substantially zero. Optionally, additionally or alternatively, by way of example, first stepwise increments of the voltage differences, with respect to the first sub-electrode 41, from the central most sub-electrode 431 to a first outermost sub-electrode of the plurality of second sub-electrodes 43 on a first side and second stepwise increments of the voltage differences, with respect to the first sub-electrode 41, from the central most sub-electrode 431 to a second outermost sub-electrode of the plurality of second sub-electrodes 43 on a second side are symmetrical with respect to each other. Optionally, in a similar manner , additionally or alternatively, by way of example, first stepwise increments of the voltage differences, with respect to the third sub-electrode 61, from the central most sub-electrode 631 to a first outermost sub-electrode of the plurality of fourth sub-electrodes 63 on a first side and second stepwise increments of the voltage differences, with respect to the third sub-electrode 61, from the central most sub-electrode 631 to a second outermost sub-electrode of the plurality of fourth sub-electrodes 63 on a second side are symmetrical with respect to each other. By having this design, a degree of spinning and thus a deflection level of each of the liquid crystal molecules surround the respective one of the plurality of first electrode groups 40 increases gradually from the main optical axis to two side, e.g., in a symmetrical fashion, thereby forming a first liquid crystal lens 50 that is symmetrical, and a degree of spinning and thus a deflection level of each of the liquid crystal molecules surround the respective one of the plurality of second electrode groups 60 increases gradually from the main optical axis to two side, e.g., in a symmetrical fashion, thereby forming a second liquid crystal lens 70 that is symmetrical.

Optionally, the voltage level of the first sub-electrode 41 is substantially same as the voltage level of the central most sub-electrode 431 of the plurality of second sub-electrodes 43 such that the difference between the voltage level of the first sub-electrode 41 and the voltage level of the central most sub-electrode 431 of the plurality of second sub-electrodes 43 is substantially zero. Optionally, specifically, the voltage level of the first sub-electrode 41 and the voltage level of the central most sub-electrode 431 of the plurality of second sub-electrodes 43 may have any appropriate values as long as the difference there-between is substantially zero. Optionally, the voltage level of the first sub-electrode 41 and the voltage level of the central most sub-electrode 431 of the plurality of second sub-electrodes 43 are both substantially zero. Optionally, similarly, the voltage level of the third sub-electrode 61 is substantially same as the voltage level of the central most sub-electrode 631 of the plurality of fourth sub-electrodes 63 such that a difference between the voltage level of the third sub-electrode 61 and the voltage level of the central most sub-electrode 631 of the plurality of fourth sub-electrodes 63 is substantially zero. Optionally, specifically, the voltage level of the third sub-electrode 61 and the voltage level of the central most sub-electrode 631 of the plurality of fourth sub-electrodes 63 may have any appropriate values as long as the difference there-between is substantially zero. Optionally, the voltage level of the third sub-electrode 61 and the voltage level of the central most sub-electrode 631 of the plurality of fourth sub-electrodes 63 are both substantially zero.

In some embodiments, voltage levels respectively at the plurality of second sub-electrodes increase, in stepwise increments, from the central most sub-electrode 431 of the plurality of second sub-electrodes 43 to the outermost sub-electrodes of the plurality of second sub-electrodes 43 on two sides, respectively, in a symmetrical fashion. In one example, both voltages applied to the first sub-electrode 41 and the central most sub-electrode 431 of the plurality of second sub-electrodes 43 is 0. Optionally, a maximum value of the voltage applied to one of the plurality of second sub-electrodes 43 is 4V. Optionally, the voltages respectively applied to the plurality of second sub-electrodes 43 successively increase in the form of an arithmetic progression. Optionally, the voltages respectively applied to the plurality of second sub-electrodes 43 successively increase in a form determined depending on parameters of the display panel having the plurality of subpixels Sp, or determined as needed. In other words, optionally, in an alternative embodiment, optionally, the voltages respectively applied to the plurality of second sub-electrodes 43 may successively increase in the form of a non-arithmetic progression.

In some embodiments, voltage levels respectively at the plurality of fourth sub-electrodes increase, in stepwise increments, from the central most sub-electrode 631 of the plurality of fourth sub-electrodes 63 to the outermost sub-electrodes of the plurality of fourth sub-electrodes 63 on two sides, respectively, in a symmetrical fashion. In one example, both voltages applied to the third sub-electrode 61 and the central most sub-electrode 631 of the plurality of fourth sub-electrodes 63 is 0. Optionally, a maximum value of the voltage applied to one of the plurality of fourth sub-electrodes 63 is 10V. Optionally, the voltages respectively applied to the plurality of fourth sub-electrodes 63 successively increase in the form of an arithmetic progression. Optionally, the voltages respectively applied to the plurality of fourth sub-electrodes 63 successively increase in a form determined depending on parameters of a display panel having a plurality of subpixels Sp herein, or determined as needed. In other words, in an alternative embodiment, optionally, the voltages respectively applied to the plurality of fourth sub-electrodes 63 may successively increase in the form of a non-arithmetic progression.

Various appropriate materials may be used for making the first sub-electrode 41, the plurality of second sub-electrodes 43, the third sub-electrode 61, and the plurality of fourth sub-electrodes 63. Examples of materials suitable for making the first sub-electrode 41, the plurality of second sub-electrodes 43, the third sub-electrode 61, and the plurality of fourth sub-electrodes 63 comprise indium tin oxide (ITO), silver, copper, and aluminum.

Various appropriate materials may be used for making the first insulating layer 42 and the second insulating layer 62. Examples of materials suitable for making the first insulating layer 42 and the second insulating layer 62 comprise polyimide, acrylic, epoxide resin, polyethylene glycol terephthalate, polyethylene naphthalate, polycarbonate, polyimide, polyvinyl sulfonate, polyformaldehyde, polyarylester, and hexamethyldisilo xane.

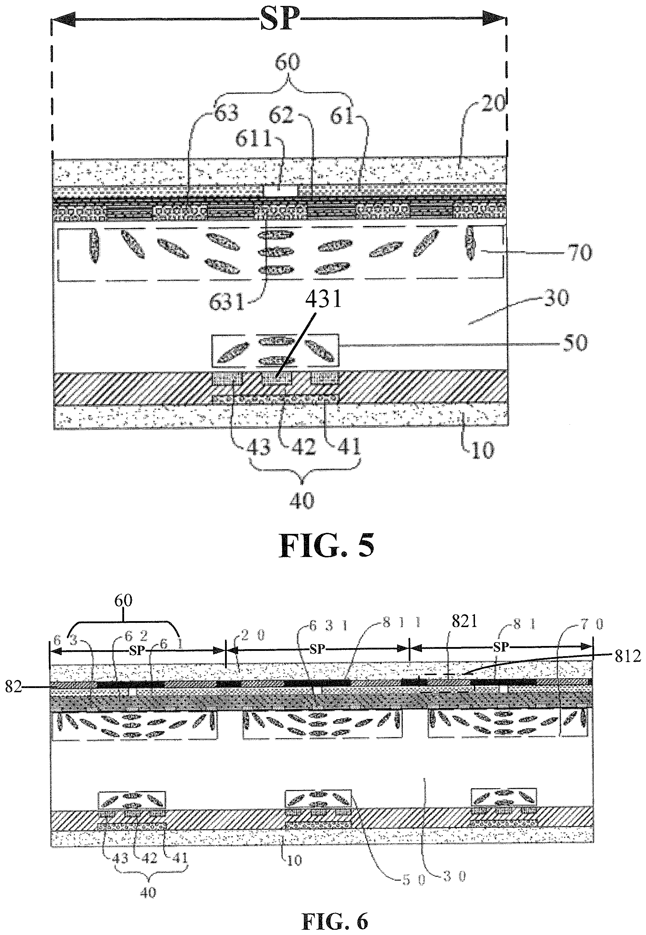

FIG. 5 is a schematic diagram illustrating a structure of a display panel having a plurality of subpixels in some embodiments according to the present disclosure. Referring to FIG. 5, in order to further increase of light utilization rate of the display panel having the plurality of subpixels Sp, in some embodiments, the display panel has a first aperture 611 extending through the third sub-electrode 61 in each of the plurality of subpixels Sp. Optionally, an orthographic projection of the central most sub-electrode 631 of the plurality of fourth sub-electrodes 63 on the third sub-electrode 61 covers the first aperture 611. One of the plurality of fourth sub-electrodes 63 directly adjacent to the central most sub-electrode 631 and portions of the third sub-electrode 61 at the edge of the first aperture 611 forms a fringe electric field enhancing the degree of spinning and thus a deflection level of each of respective liquid crystal molecules, and ensuring that the shape of the first liquid crystal lens 50 and the shape of the second liquid crystal lens 70 cooperatively paired with each other. Optionally, a curved surface of the first liquid crystal lens 50 is a substantially spherical surface, a curved surface of the second liquid crystal lens 70 is a substantially spherical surface, providing maximum light utilization rate for the display panel. Optionally, the first aperture 611 leads to a greater thickness D1 of the second liquid crystal lens 70, increasing the utilization rate of liquid crystal and the light utilization rate. In some embodiments, the display panel does not comprise an aperture extending through the third sub-electrode 61.

The first aperture 611 may have various appropriate sizes. Optionally, a ratio of a width of the first aperture 611 to a width of the central most sub-electrode of the plurality of fourth sub-electrodes is in a range of 1:10 to 4:5, e.g., 1:10 to 2:10, 1:5 to 2:5, 2:5 to 3:5, 3:5 to 4:5. Optionally, the ratio of the width of the first aperture 611 to the width of the central most sub-electrode of the plurality of fourth sub-electrodes is 2:3.

FIG. 6 is a schematic diagram illustrating a structure of a display panel having a plurality of subpixels in some embodiments according to the present disclosure. Referring to FIG. 6, the display panel having the plurality of subpixels Sp comprises a black matrix 81 defining a plurality of second apertures 812 which are spaced apart from one another by the black matrix 81. The display panel having the plurality of subpixels Sp further comprises a color filter 82 interposed between the second base substrate 20 and the plurality of second electrode groups 60. The color filter 82 comprises a plurality of color filter blocks 821 respectively formed in and filling up the plurality of second apertures 812. An orthographic projection of the second liquid crystal lens 70 in each of the plurality of subpixels Sp on the second base substrate 20 covers orthographic projections of N numbers of color filter blocks of the plurality of color filter blocks 821, N is an even integer. Optionally, a part 811 of the black matrix 81 is at a central position with respect to the N numbers of color filter blocks 821 of the plurality of color filter blocks 821. Optionally, an orthographic projection of the part 811 of the black matrix 81 on the second base substrate 20 covers an orthographic projection of the central most sub-electrode 631 of the plurality of fourth sub-electrodes 63 on the second base substrate 20. Incident light will be uniformly transmitted through the color filter 82. The display panel having the plurality of subpixels Sp can display color images with good image display quality.

In some embodiments, the orthographic projection of the second liquid crystal lens 700 in each of the plurality of subpixels Sp on the second base substrate 20 covers the orthographic projections of the N numbers of color filter blocks of the plurality of color filter blocks 821 having the same color. Optionally, the value N of the N numbers of color filter blocks 821 of the plurality of color filter blocks 821 is determined as needed, as long as N is an even integer. Optionally, M parts of the black matrix 81 are respectively between any two adjacent color filter blocks of N numbers of color filter blocks of the plurality of color filter blocks 821, M is an odd integer. Optionally, a part of the black matrix 81 at a central position with respect to N numbers of color filter blocks of the plurality of color filter blocks 821, or with respect to M parts of the black matrix 81, is the part 811 of the black matrix 81.

Various appropriate light shielding materials may be used for making the black matrix 81. Various appropriate materials may be used for making the color filter 82. Examples of materials suitable for making the color filter 82 comprise quantum dots. Optionally, the use of quantum dots improves the light transmission rate of the color filter 82. Optionally, the display panel is absent of any polarizer on both sides of the liquid crystal layer 30, and the color filter is made of quantum dots, the light transmission rate of a display panel herein can reach 30%. Various appropriate materials may be used for making quantum dots. Examples of materials suitable for making quantum dots comprise silicon quantum dots, germanium quantum dots, cadmium sulfide quantum dots, cadmium selenide quantum dots, cadmium telluride quantum dots, zinc selenide quantum dots, lead sulfide quantum dots, lead selenide quantum dots, indium phosphide quantum dots, and arsenic Indium quantum dots.

In some embodiments, all incident light emitted from backlight are required to be converged by the plurality of first liquid crystal lenses 50 and, subsequently, be respectively transmitted to the plurality of second liquid crystal lenses 70. Optionally, certain control methods can be implemented to prevent portion of the incident light from transmitting through area outside the plurality of first liquid crystal lenses 50. Optionally, the backlight may be designed such that incident light is merely emitted from portions of the backlight corresponding to the plurality of first liquid crystal lenses 50, so that substantially all of the incident light transmits through the plurality of first liquid crystal lenses 50. Optionally, alternatively, the backlight may be designed such that incident light is merely emitted from portions of the backlight at a position corresponding to the plurality of first electrode groups 40, so that all the incident light transmits through the plurality of first electrode groups 40. Optionally, alternatively, a plurality of reflecting plates are disposed on a side of the first substrate 10 distal to the liquid crystal layer 30. The plurality of reflecting plates are disposed on areas outside the plurality of first liquid crystal lenses 50. Optionally, the plurality of reflecting plates are disposed on areas outside the plurality of first electrode groups 40.

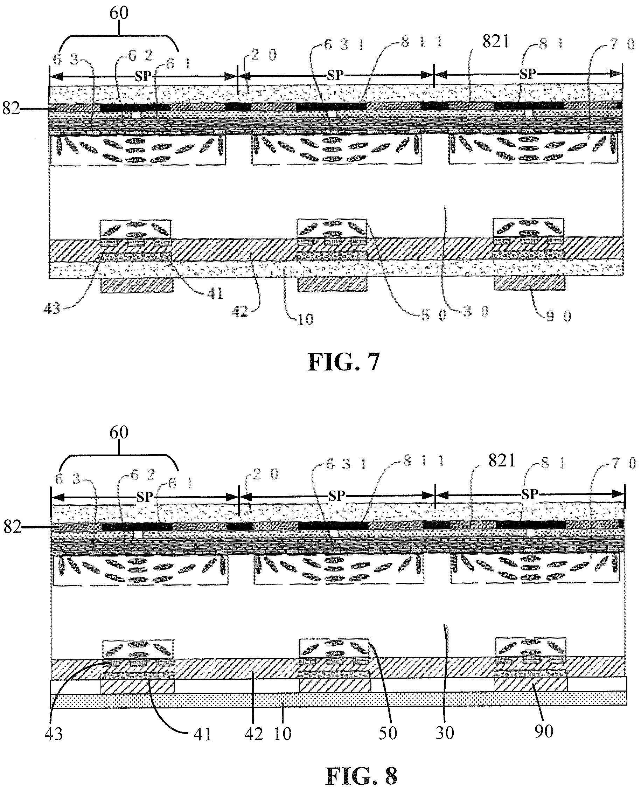

FIG. 7 is a schematic diagram illustrating a structure of a display panel having a plurality of subpixels in some embodiments according to the present disclosure. Referring to FIG. 7, in order to collimate incident light onto the display panel having the plurality of subpixels Sp, the display panel having the plurality of subpixels Sp further comprises a light collimator 90 on the side of the first base substrate 10 distal to the liquid crystal layer 30, and configure to collimate incident light into substantially collimated light. Optionally, referring to FIG. 8, alternatively, the light collimator 90 is on the side of the first base substrate 10 facing the liquid crystal layer 30, and configure to collimate incident light into substantially collimated light.

In some embodiments, the orthographic projection of the part 811 of the black matrix 81 at the central position with respect to the N numbers of color filter blocks of the plurality of color filter blocks 821 on the first base substrate 10 covers an orthographic projection of the light collimator 90 on the first base substrate 10. The incident light is collimated onto the display panel. By having this design, the light utilization rate can be significantly increased.

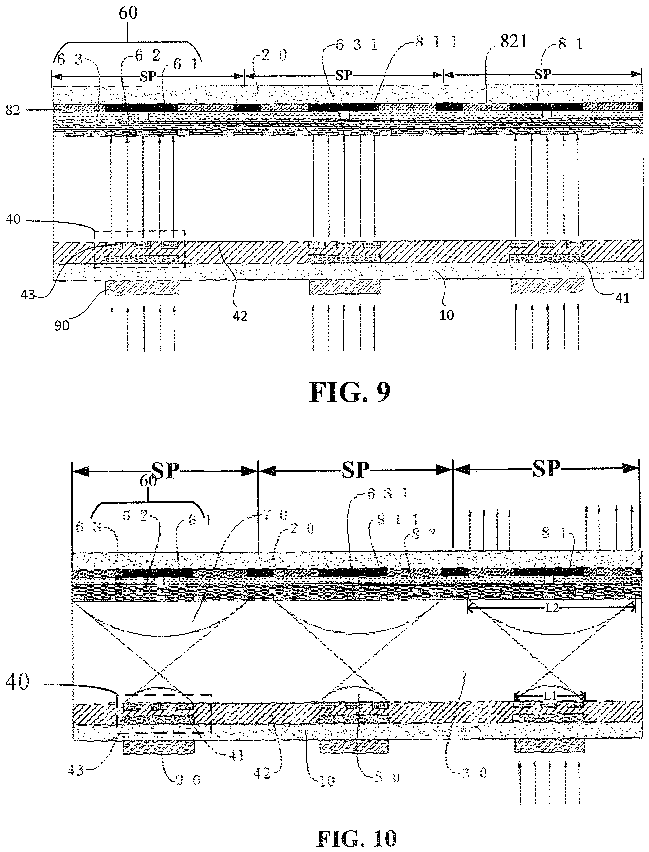

FIG. 9 is a schematic diagram illustrating a structure of a display panel having a plurality of subpixels in some embodiments according to the present disclosure. Referring to FIG. 9, a dark state display mode can be perform by the display panel having the plurality of subpixels Sp based on that the orthographic projection of the part 811 of the black matrix 81 at the central position with respect to the N numbers of color filter blocks of the plurality of color filter blocks 821 on the first base substrate 10 covers an orthographic projection of the light collimator 90 on the first base substrate 10. Optionally, incidental light is emitted thought the light collimator 90 and thereby is transmitted through the display panel having the plurality of the subpixels Sp. And the incident light is collimated into substantially collimated light after emitting through the light collimator 90. When no voltage is applied to the plurality of first electrode groups 40 respectively in the plurality of subpixels Sp and the plurality of second electrode groups 60 respectively in the plurality of subpixels Sp, the first liquid crystal lens and the second liquid crystal lens are not induced. After the collimated light emitted through the first substrate 10, and the plurality of first electrode groups 40, the collimated light is emitted onto the part 811 of the black matrix 81, and the collimated light is absorbed by the part 811 of the black matrix 81 forming the dark state display mode.

Various appropriate materials may be used for making the light collimator 90. Examples of materials suitable for making the light collimator 90 comprise nano-scale diffraction pattern. In some embodiments, a width of the light collimator 90 satisfies the requirement that the orthographic projection of the part 811 of the black matrix 81 at the central position with respect to the N numbers of color filter blocks of the plurality of color filter blocks 821 on the first base substrate 10 covers an orthographic projection of the light collimator 90 on the first base substrate 10. Optionally, the width of the light collimator 90 is equivalent to a width of the plurality of first electrode groups 40.

In another aspect, the present disclosure also provides a display apparatus, comprising the display panel mentioned above, and one or more integrated driving circuits

Various appropriate types of display apparatuses may be produced based on the display panel mentioned above. Examples of different types of display apparatuses comprise cellphones, tablet computers, computer monitors, game consoles, televisions, display panels, wearable devices, and other living appliances or household appliances with display functions. Optionally, the display apparatus further comprises other necessary parts for forming a normal display apparatus. For example, a cellphone comprises the display panel mentioned above, one or more integrated driving circuits, a touch-control panel, a case, a CPU, a camera, a fingerprint reader, a voice processor and etc.

In another aspect, the present disclosure also provides a method of driving a display panel having a plurality of subpixels. In some embodiments, the display panel comprises a first base substrate; a second base substrate facing the first base substrate; and a liquid crystal layer between the first base substrate and the second base substrate. In some embodiments, the method of driving a display panel having a plurality of subpixels comprises generating a first fringe electric field to form a first liquid crystal lens in each of the plurality of subpixels in the liquid crystal layer by applying a first voltage level to a plurality of first electrode groups respectively in the plurality of subpixels and on a side of the first base substrate facing the liquid crystal layer; and generating a second fringe electric filed to form a second liquid crystal lens in each of the plurality of subpixels in the liquid crystal layer by applying a second voltage level to a plurality of second electrode groups respectively in the plurality of subpixels and on a side of the second base substrate facing the liquid crystal layer. Optionally, focal points of the first liquid crystal lens and the second liquid crystal lens are maintained coincided during adjusting the grayscale by method of driving a display panel having a plurality of subpixels as above.

In some embodiments, the method of driving a display panel having a plurality of subpixels comprises adjusting a grayscale of one of the plurality of subpixels by changing one or a combination of the first voltage level and the second voltage level, thereby changing one or a combination of a first curvature of the first liquid crystal lens and a second curvature of the second liquid crystal lens in a same subpixel of the plurality of subpixels. Optionally, adjusting the grayscale comprises increasing the grayscale of the one of the plurality of subpixels by increasing one or a combination of the first voltage level and the second voltage level, thereby increasing one or a combination of a first curvature of the first liquid crystal lens and a second curvature of the second liquid crystal lens in a same subpixel of the plurality of subpixels. Optionally, adjusting the grayscale comprises decreasing the grayscale of the one of the plurality of subpixels by decreasing one or a combination of the first voltage level and the second voltage level, thereby decreasing one or a combination of a first curvature of the first liquid crystal lens and a second curvature of the second liquid crystal lens in a same subpixel of the plurality of subpixels.

In some embodiments, in each of the plurality of first electrode groups in a respective one of the plurality of subpixels comprises a first sub-electrode on a side of the first base substrate facing the liquid crystal layer; a first insulating layer on a side of the first sub-electrode distal to the first base substrate, and covering the first sub-electrode; and a plurality of second sub-electrodes on a side of the first insulating layer distal to the first sub-electrode. Each of the plurality of second electrode groups in the respective one of the plurality of subpixels comprises a third sub-electrode on a side of the second base substrate facing the liquid crystal layer; a second insulating layer on a side of the third sub-electrode distal to the second base substrate, and covering the third sub-electrode; and a plurality of fourth sub-electrodes on a side of the second insulating layer distal to the third sub-electrode. Optionally, an orthographic projection of the first sub-electrode on the first base substrate substantially covers orthographic projections of the plurality of second sub-electrodes on the first base substrate. Optionally, an orthographic projection of the third sub-electrode on the second base substrate substantially covers orthographic projections of the plurality of fourth sub-electrodes on the second base substrate. Optionally, a voltage level at the first sub-electrode is maintained substantially same as a voltage level at a central most sub-electrode of the plurality of second sub-electrodes. Optionally, a voltage level at the third sub-electrode is maintained substantially same as a voltage level at a central most sub-electrode of the plurality of fourth sub-electrodes. Optionally, voltage levels respectively at the plurality of second sub-electrodes increase, in stepwise increments, from the central most sub-electrode of the plurality of second sub-electrodes to outermost sub-electrodes of the plurality of second sub-electrodes on two sides, respectively. Optionally, voltage levels respectively at the plurality of fourth sub-electrodes increase, in stepwise increments, from the central most sub-electrode of the plurality of fourth sub-electrodes to outermost sub-electrodes of the plurality of fourth sub-electrodes on two sides, respectively. In some embodiments, the plurality of second sub-electrodes comprises a central most sub-electrode of the plurality of second sub-electrodes disposed in the central of the plurality of second sub-electrodes. The plurality of fourth sub-electrodes comprises a central most sub-electrode of the plurality of fourth sub-electrodes disposed in the central of the plurality of fourth sub-electrodes. In some embodiments, the display panel further comprises a black matrix defining a plurality of second apertures; and a color filter between the second base substrate and the plurality of second electrode groups, and comprising a plurality of color filter blocks respectively in the plurality of second apertures. Optionally, an orthographic projection of the second liquid crystal lens in each of the plurality of subpixels on the second base substrate covers orthographic projections of N numbers of color filter blocks of the plurality of color filter blocks, N is an even integer. Optionally, an orthographic projection of a part of the black matrix at a central position with respect to the N numbers of color filter blocks of the plurality of color filter blocks on the second base substrate covers an orthographic projection of the central most sub-electrode of the plurality of fourth sub-electrodes on the second base substrate.

As used herein, the term "substantially the same" refers to a difference between two values not exceeding 10%, e.g., not exceeding 8%, not exceeding 6%, not exceeding 4%, not exceeding 2%, not exceeding 1%, not exceeding 0.5%, not exceeding 0.1%, not exceeding 0.05%, and not exceeding 0.01%.

In some embodiments, the first voltage level is applied to the plurality of first electrode groups respectively in the plurality of subpixels, and the second voltage level is applied to the plurality of second electrode groups respectively in the plurality of subpixels. Optionally, a voltage level of the first sub-electrode is equivalent to a voltage level of the central most sub-electrode of the plurality of second sub-electrodes. A voltage level of the third sub-electrode is equivalent to a voltage level of the central most sub-electrode central most sub-electrode. Optionally, voltage levels respectively at the plurality of second sub-electrodes increase, in stepwise increments, from the central most sub-electrode of the plurality of second sub-electrodes to the outermost sub-electrodes of the plurality of second sub-electrodes on two sides, respectively. Optionally, voltage levels respectively at the plurality of fourth sub-electrodes increase, in stepwise increments, from the central most sub-electrode of the plurality of fourth sub-electrodes to the outermost sub-electrodes of the plurality of fourth sub-electrodes on two sides, respectively.

In some embodiment, increasing the grayscale of the one of the plurality of subpixels comprise increasing each increment of the stepwise increments of the voltage levels respectively at the plurality of second sub-electrodes from the central most sub-electrode of the plurality of second sub-electrodes to the outermost sub-electrodes of the plurality of second sub-electrodes on two sides, respectively. Optionally, additionally or alternatively, increasing the grayscale of the one of the plurality of subpixels comprise increasing each increment of the stepwise increments of the voltage levels respectively at the plurality of fourth sub-electrodes from the central most sub-electrode of the plurality of fourth sub-electrodes to the outermost sub-electrodes of the plurality of fourth sub-electrodes on two sides, respectively. Thereby one or a combination of a first curvature of the first liquid crystal lens and a second curvature of the second liquid crystal lens in a same subpixel of the plurality of subpixels are increased.

In some embodiments, decreasing the grayscale of the one of the plurality of subpixels comprises decreasing each increment of the stepwise increments of the voltage levels respectively at the plurality of second sub-electrodes from the central most sub-electrode of the plurality of second sub-electrodes to the outermost sub-electrodes of the plurality of second sub-electrodes on two sides, respectively. Optionally, decreasing the grayscale of the one of the plurality of subpixels comprises decreasing each increment of the stepwise increments of the voltage levels respectively at the plurality of fourth sub-electrodes from the central most sub-electrode of the plurality of fourth sub-electrodes to the outermost sub-electrodes of the plurality of fourth sub-electrodes on two sides, respectively. Thereby, one or a combination of a first curvature of the first liquid crystal lens and a second curvature of the second liquid crystal lens in a same subpixel of the plurality of subpixels are decreased.

In some embodiments, a grayscale of one of the plurality of subpixels is adjusted by changing one or a combination of the first voltage level and the second voltage level, thereby changing one or a combination of a first curvature of the first liquid crystal lens and a second curvature of the second liquid crystal lens in a same subpixel of the plurality of subpixels.

For example, in the process of increasing the grayscale of the one of the plurality of subpixels, at a first grayscale of the one of the plurality of subpixels, voltage levels of each of the plurality of fourth sub-electrodes are 8V, 4V, 0, 4V, 8V from one outermost sub-electrodes of the plurality of fourth sub-electrodes through the central most sub-electrode of the plurality of fourth sub-electrodes to the other one outermost sub-electrodes of the plurality of fourth sub-electrodes. In other words, the value of the increments of voltage levels respectively at the plurality of fourth sub-electrodes from the central most sub-electrode of the plurality of fourth sub-electrodes to the outermost sub-electrodes of the plurality of fourth sub-electrodes on two sides is 4V. When the grayscale of the one of the plurality of subpixels are increased, at an increased grayscale of the one of the plurality of subpixels, voltage levels of each of the plurality of fourth sub-electrodes are 10V, 5V, 0, 5V, 10V from one outermost sub-electrodes of the plurality of fourth sub-electrodes through the central most sub-electrode of the plurality of fourth sub-electrodes to the other one outermost sub-electrodes of the plurality of fourth sub-electrodes. In other words, the value of the increase of voltage levels respectively at the plurality of fourth sub-electrodes from the central most sub-electrode of the plurality of fourth sub-electrodes to the outermost sub-electrodes of the plurality of fourth sub-electrodes on two sides is 5V. The increasing each increment of the stepwise increments of the voltage levels respectively at the plurality of fourth sub-electrodes from the central most sub-electrode of the plurality of second sub-electrodes to the outermost sub-electrodes of the plurality of second sub-electrodes on two sides leads to the increasing of the grayscale of the one of the plurality of subpixels.

For example, in the process of increasing the grayscale of the one of the plurality of subpixels, at a first grayscale of the one of the plurality of subpixels, voltage levels of each of the plurality of second sub-electrodes are 8V, 4V, 0, 4V, 8V from one outermost sub-electrodes of the plurality of second sub-electrodes through the central most sub-electrode of the plurality of second sub-electrodes to the other one outermost sub-electrodes of the plurality of second sub-electrodes. In other words, the value of the increments of voltage levels respectively at the plurality of second sub-electrodes from the central most sub-electrode of the plurality of second sub-electrodes to the outermost sub-electrodes of the plurality of second sub-electrodes on two sides is 4V. When the grayscale of the one of the plurality of subpixels are increased, at an increased grayscale of the one of the plurality of subpixels, voltage levels of each of the plurality of second sub-electrodes are 10V, 5V, 0, 5V, 10V from one outermost sub-electrodes of the plurality of second sub-electrodes through the central most sub-electrode of the plurality of second sub-electrodes to the other one outermost sub-electrodes of the plurality of second sub-electrodes. In other words, the value of the increments of voltage levels respectively at the plurality of second sub-electrodes from the central most sub-electrode of the plurality of second sub-electrodes to the outermost sub-electrodes of the plurality of second sub-electrodes on two sides is 5V. The increasing each increment of the stepwise increments of the voltage levels respectively at the plurality of second sub-electrodes from the central most sub-electrode of the plurality of second sub-electrodes to the outermost sub-electrodes of the plurality of second sub-electrodes 43 on two sides leads to the increasing of the grayscale of the one of the plurality of subpixels.

In some embodiments, in order to independently control changes of one or a combination of the first curvature of the first liquid crystal lens and the second curvature of the second liquid crystal lens in a same subpixel of the plurality of subpixels, the voltage level of the central most sub-electrode of the plurality of second sub-electrodes and the voltage level of the central most sub-electrode of the plurality of fourth sub-electrodes are the same. As such, the difference between the voltage level of the central most sub-electrode of the plurality of second sub-electrodes and the voltage level of the central most sub-electrode of the plurality of fourth sub-electrodes is avoided. The change of the first curvature of the first liquid crystal lens and the change of the second curvature of the second liquid crystal lens are easily controlled. The light utilization rate is increased and the uniformity of light dispersion is also increased.

In some embodiments, a bright state display mode is L255 mode, a dark state display mode is L0 mode, a grayscale display mode is a mode between the bright state display mode L255 and the dark state display mode L0. FIG. 10 is a schematic diagram illustrating a structure of a display panel having a plurality of subpixels in some embodiments according to the present disclosure. Referring to FIG. 10, in some embodiments, the display mode of a display panel is at the bright state display mode L255, a diameter L1 of the first liquid crystal lens 50 and a diameter L2 of the second liquid crystal lens 70 reach maximum values. An orthographic projection of the first liquid crystal lens 50 on the first substrate 10 respectively coincides with an orthographic projection of a plurality of second sub-electrodes 43 on the first substrate 10. An orthographic projection of the second liquid crystal lens 70 on the second base substrate 20 respectively coincides with an orthographic projection of a plurality of fourth sub-electrodes 63. A first curvature of the first liquid crystal lens 50 and a second curvature of the second liquid crystal lens 70 in a same subpixel of the plurality of subpixels reach maximum value. Optionally, the incident light emitted from the backlight transmits sequentially through a light collimator 90 forming a collimated incident light, to one of the plurality of first electrode groups 40 in one of the plurality of subpixels, to a respective first liquid crystal lens 50, converged to a respective second liquid crystal lens 70, to a respective one of plurality of second electrode groups 60 int eh same one of the plurality of subpixels, and then dispersed to a respective color filter 82, and the bright state display mode is performed.

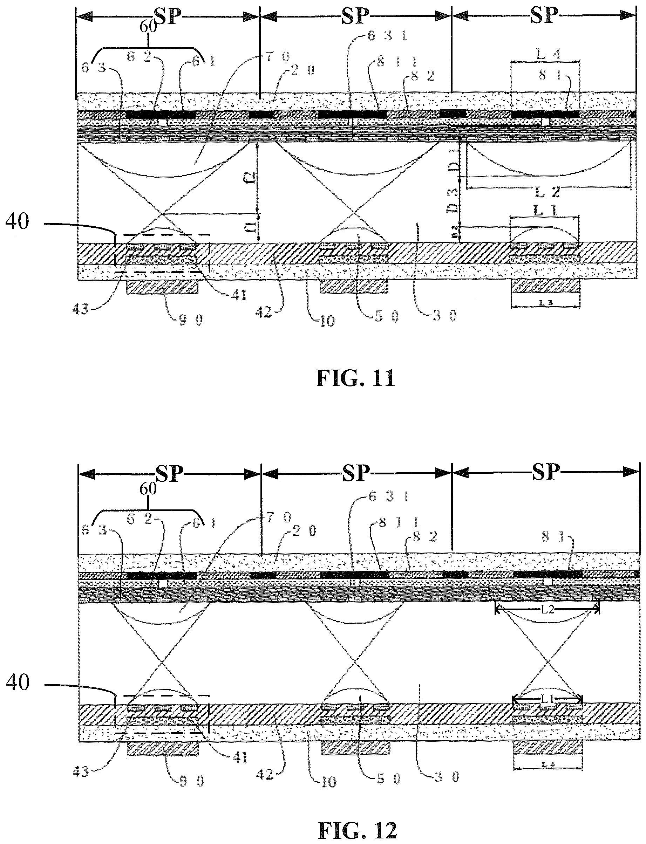

FIG. 11 is a schematic diagram illustrating a structure of a display panel having a plurality of subpixels in some embodiments according to the present disclosure. Referring to FIG. 11, in some embodiments, the display mode of a display panel is at the bright state display mode L255. Optionally, a thickness of a case of the display panel is 30 µm. Optionally, an initial deflection angle of liquid crystal molecules with respect to the first base substrate 10 and the second base substrate 20 is 90°. Optionally, the included angle of the liquid crystal molecules with respect to the first base substrate 10 and the second base substrate 20 is 2°. Optionally, a width L3 of the light collimator 90 is in a range of approximately 7 µm to approximately 10 µm, e.g., approximately 7 µm to approximately 8 µm, approximately 8 µm to approximately 9 µm, approximately 9 µm to approximately 10 µm. Optionally, the diameter L1 of the first liquid crystal lens 50 is approximately 10 µm. Optionally, the diameter L2 of the second liquid crystal lens 70 is approximately 30 µm. Optionally, a width L4 of a part 811 of the black matrix 81 is in a range of approximately 11 µm to approximately 14 µm, e.g. approximately 11 µm to approximately 12 µm, approximately 12 µm to approximately 13 µm, approximately 13 µm to approximately 14 µm. Optionally, a focal length f1 of the first liquid crystal lens 50 is approximately 7.4 µm, and a thickness D2 of the first liquid crystal lens 50 is approximately 5.6 µm. Optionally, a focal length f2 of the second liquid crystal lens 70 is approximately 22.3 µm, and a thickness D1 of the second liquid crystal lens 70 is 16.8 µm. Optionally, a distance D3 between a side of the first liquid crystal lens 50 facing the second liquid crystal lens 70 and a side of the second liquid crystal lens 70 facing the first liquid crystal lens 50 is 7.6 µm.

In some embodiments, the display mode is the grayscale display mode between the bright state display mode L255 and the dark state display mode L0. One or a combination of the first voltage level and the second voltage level are changed, thereby one or a combination of the first curvature of the first liquid crystal lens and the second curvature of the second liquid crystal lens in a same subpixel of the plurality of subpixels are changed, thereby the grayscale of one of the plurality of subpixels is adjusted. In one example, each increment of the stepwise increments of the voltage levels respectively at the plurality of second sub-electrodes from the central most sub-electrode of the plurality of second sub-electrodes to the outermost sub-electrodes of the plurality of second sub-electrodes on two sides is increased, or each increment of the stepwise increments of the voltage levels respectively at the plurality of fourth sub-electrodes from the central most sub-electrode of the plurality of fourth sub-electrodes to the outermost sub-electrodes of the plurality of fourth sub-electrodes on two sides is increased, thereby one or a combination of the first curvature of the first liquid crystal lens and the second curvature of the second liquid crystal lens in a same subpixel of the plurality of subpixels are increased, therefore the grayscale of the one of the plurality of subpixels is increased. Optionally, a focal point of the first liquid crystal lens coincides with a focal point of the second liquid crystal lens, ensuring that all of the incident light is converged and transmitted by the first liquid crystal lens to the second liquid crystal lens. The light utilization rate is increased and coloring mixing can be avoided. In another example, each increment of the stepwise increments of the voltage levels respectively at the plurality of second sub-electrodes from the central most sub-electrode of the plurality of second sub-electrodes to the outermost sub-electrodes of the plurality of second sub-electrodes on two sides is decreased, or each increment of the stepwise increments of the voltage levels respectively at the plurality of fourth sub-electrodes from the central most sub-electrode of the plurality of fourth sub-electrodes to the outermost sub-electrodes of the plurality of fourth sub-electrodes on two sides is decreases, thereby one or a combination of the first curvature of the first liquid crystal lens and the second curvature of the second liquid crystal lens in a same subpixel of the plurality of subpixels are decreased, therefore the grayscale of the one of the plurality of subpixels is decreased. Optionally, the focal point of the first liquid crystal lens coincides with the focal point of the second liquid crystal lens, ensuring that all of the incident light is converged and transmitted by the first liquid crystal lens to the second liquid crystal lens. The light utilization rate is increased and coloring mixing can be avoided.

FIG. 12 is a schematic diagram illustrating a structure of a display panel having a plurality of subpixels in some embodiments according to the present disclosure. Referring to FIG. 12, in some embodiments, one or a combination of the diameter L1 of the first liquid crystal lens 50 and the diameter L2 of the second liquid crystal lens 70 in a same subpixel of the plurality of subpixels are adjusted, and one or a combination of the first curvature of the first liquid crystal lens 50 and the second curvature of the second liquid crystal lens 70 in a same subpixel of the plurality of subpixels are also adjusted, therefore, the grayscale of the one of the plurality of subpixels is adjusted. Optionally, the focal point of the first liquid crystal lens 50 and the focal point of the second liquid crystal lens 70 are unchanged. In one example, decreasing the grayscale of one of the plurality of subpixels comprises decreasing each increment of the stepwise increments of the voltage levels respectively at the plurality of second sub-electrodes 43 from the central most sub-electrode 431 of the plurality of second sub-electrodes 43 to outermost sub-electrodes of the plurality of second sub-electrodes on two sides, respectively. Optionally, additionally or alternatively, decreasing the grayscale of the one of the plurality of subpixels comprises decreasing each increment of the stepwise increments of the voltage levels respectively at the plurality of fourth sub-electrodes 63 from the central most sub-electrode 631 of the plurality of fourth sub-electrodes 63 to outermost sub-electrodes of the plurality of fourth sub-electrodes on two sides, respectively. Subsequently, one or a combination of the first curvature of the first liquid crystal lens 50 and the second curvature of the second liquid crystal lens 70 are decreased, and one or a combination of the diameter L1 of the first liquid crystal lens 50 and the diameter L2 of the second liquid crystal lens 70 become shorter. Optionally, the focal point of the first liquid crystal lens 50 and the focal point of the second liquid crystal lens 70 are unchanged. For example, in a direction from the outermost sub-electrodes of the plurality of fourth sub-electrodes 63 on two sides to the central most sub-electrode 631 of the plurality of fourth sub-electrodes 63, the respective voltages are sequentially not applied on the respective most marginal ones of the plurality of fourth sub-electrodes 63. In one example, a total number of fourth sub-electrodes in each of the plurality of fourth sub-electrodes 63 is 5.

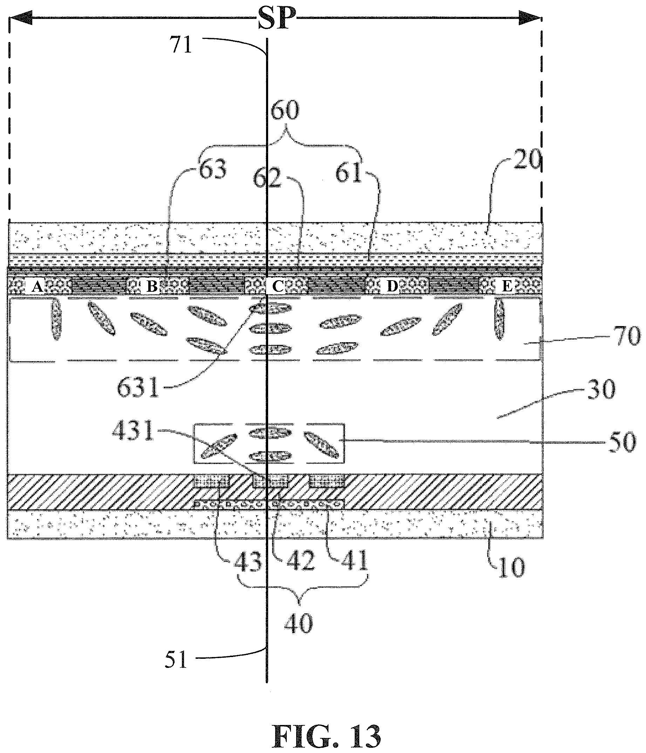

In some embodiments, decreasing the grayscale of the one of the plurality of subpixels comprises gradually discontinuing application of voltages to fourth sub-electrodes of the plurality of fourth sub-electrodes 63 along a direction from the outermost fourth sub-electrodes to the central most sub-electrode 631, e.g., one sub-electrode by one sub-electrode. FIG. 13 is a schematic diagram illustrating a structure of a display panel having a plurality of subpixels in some embodiments according to the present disclosure. Referring to FIG. 13, a total five fourth sub-electrodes of the plurality of fourth sub-electrodes 63 is numbered from 1 to 5. In the process of decreasing the grayscale of the one of the plurality of subpixels, application of voltages is first discontinued on the fourth sub-electrode 1 (at position labeled 'A') and the fourth sub-electrode 5 (at position labeled 'E') of the plurality of fourth sub-electrodes 63, while voltages are still applied on the fourth sub-electrode 2 (at position labeled 'B'), the fourth sub-electrode 3 (at position labeled 'C'), and the fourth sub-electrode 4 (at position labeled 'D') of the plurality of fourth sub-electrodes 63. When the grayscale of the one of the plurality of subpixels is continuously decreased, application of voltages is discontinued on the fourth sub-electrode 1, the fourth sub-electrode 2, the fourth sub-electrode 4, and the fourth sub-electrode 5 of the plurality of fourth sub-electrodes 63, while voltage is still applied to the fourth sub-electrode 3.

Referring to FIG. 12, in some embodiments, the first liquid crystal lens 50 can be independently controlled by one of the plurality of first electrode groups 40 respectively in the plurality of subpixels Sp, and the second liquid crystal lens 70 can be independently controlled by one of the plurality of second electrode groups 60 respectively in the plurality of subpixels Sp. In some embodiments, in the process of decreasing the grayscale of one of the plurality of subpixels, the plurality of first electrode groups 40 respectively in the plurality of subpixels Sp and the plurality of second electrode groups 60 respectively in the plurality of subpixels Sp can be independently adjusted depending on the grayscale of the plurality of subpixels Sp. Optionally, in the process of decreasing the grayscale of one of the plurality of subpixels, the diameter L2 of the second liquid crystal lens 70 is adjusted, but the diameter L1 of the first liquid crystal lens 50 is kept the same. Optionally, the number of the second sub-electrodes, on which application of voltages are discontinued, of the plurality of second sub-electrodes 43 can be determined as needed. Optionally, the number of the second sub-electrodes, on which application of voltages are discontinued, of the plurality of second sub-electrodes 43 can be determined as needed. Optionally, in a direction from the outermost sub-electrodes of the plurality of second sub-electrodes 43 on two sides to the central most sub-electrode 431 of the plurality of second sub-electrodes 43, the application of voltages is sequentially discontinued on the plurality of second sub-electrodes 43 in a symmetrical fashion. Optionally, in a direction from the outermost sub-electrodes of the plurality of fourth sub-electrodes 63 on two sides to the central most sub-electrode 631 of the plurality of fourth sub-electrodes 63, the application of voltages is sequentially discontinued on the plurality of fourth sub-electrodes 63 in a symmetrical fashion. For example, referring to FIG. 13, in the process of decreasing the grayscale of the one of the plurality of subpixels, application of voltages on one of the plurality of fourth sub-electrodes 63 at position A and one of the plurality of fourth sub-electrodes 63 at position E is discontinued, while voltages are still applied on one of the plurality of fourth sub-electrodes 63 at position B, one of the plurality of fourth sub-electrodes 63 at position C, and one of the plurality of fourth sub-electrodes 63 at position D. When the grayscale of the one of the plurality of subpixels is continuously decreased, application of voltages on the plurality of fourth sub-electrodes 63 at position A, position B, position D, and position E is then discontinued. The grayscale of the one of the plurality of subpixels is adjusted, the light utilization rate in different grayscale of the one of the plurality of subpixels is increased, and the display quality of the display panel having the plurality of subpixels is improved.

In some embodiments, increasing the grayscale of one of the plurality of subpixels comprises increasing each increment of the stepwise increments of the voltage levels respectively at the plurality of second sub-electrodes 43 from the central most sub-electrode 431 of the plurality of second sub-electrodes 43 to outermost sub-electrodes of the plurality of second sub-electrodes on two sides, respectively. Optionally, increasing the grayscale of the one of the plurality of subpixels comprises increasing each increment of the stepwise increments of the voltage levels respectively at the plurality of fourth sub-electrodes 63 from the central most sub-electrode 631 of the plurality of fourth sub-electrodes 63 to outermost sub-electrodes of the plurality of fourth sub-electrodes on two sides, respectively. Subsequently, one or a combination of the first curvature of the first liquid crystal lens 50 and the second curvature of the second liquid crystal lens 70 are increased, and one or a combination of the diameter L1 of the first liquid crystal lens 50 and the diameter L2 of the second liquid crystal lens 70 become greater. Optionally, the focal point of the first liquid crystal lens 50 and the focal point of the second liquid crystal lens 70 are unchanged.

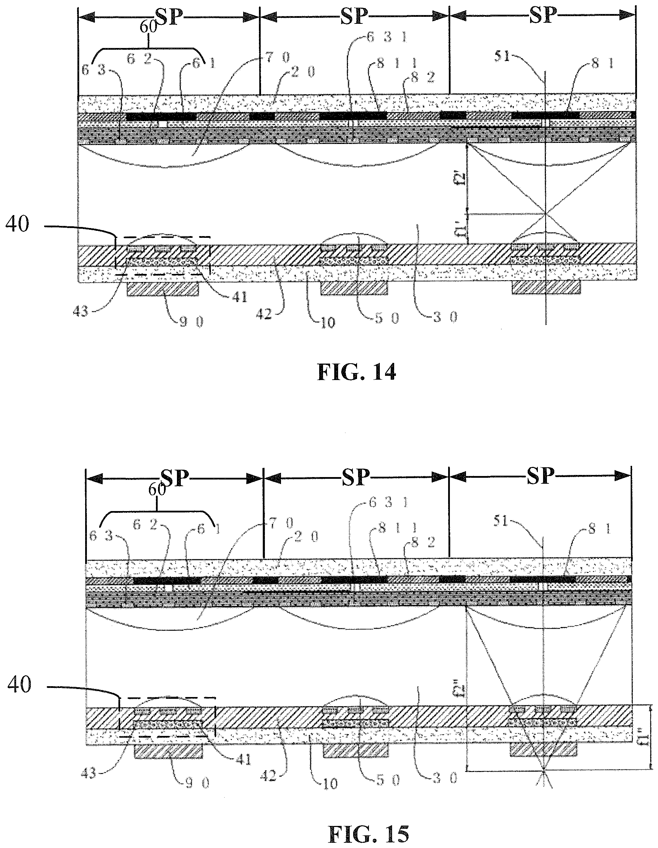

FIG. 14 is a schematic diagram illustrating a structure of a display panel having a plurality of subpixels in some embodiments according to the present disclosure. Referring to FIG. 14, the diameter L1 of the first liquid crystal lens 50 and the diameter L2 of the second liquid crystal lens 70 are unchanged. One or a combination of the first curvature of the first liquid crystal lens 50 and the second curvature of the second liquid crystal lens 70 in a same subpixel of the plurality of subpixels are adjusted. Optionally, when the first curvature of the first liquid crystal lens 50 is changed, the focal point of the first liquid crystal lens 50 moves along the main optical axis 51 of the first liquid crystal lens 50. Additionally or alternatively, when the second curvature of the second liquid crystal lens 70 is changed, the focal point of the second liquid crystal lens 70 moves along the main optical axis 71 of the second liquid crystal lens 70 . Optionally, the focal point of the first liquid crystal lens 50 still remains to coincide with the focal point of the second liquid crystal lens 70. Optionally, the focal length of the first liquid crystal lens 50 is fl', and the focal length of the second liquid crystal lens 70 is f2'. In some embodiments, One or a combination of the first curvature of the first liquid crystal lens 50 and the second curvature of the second liquid crystal lens 70 in a same subpixel of the plurality of subpixels are adjusted by respectively adjusting one or a combination of voltage levels of one of the plurality of first electrode groups 40 in the same subpixel of the plurality of subpixels and the voltage levels of one of the plurality of second electrode groups 60 in the same subpixel of the plurality of subpixels. In some embodiments, in the process of decreasing the grayscale of the one of the plurality of subpixels, each increment of the stepwise increments of the voltage levels respectively at the plurality of second sub-electrodes 43 are decreased from the central most sub-electrode 431 of the plurality of second sub-electrodes 43 to the outermost sub-electrodes of the plurality of second sub-electrodes 43 on two sides, respectively. Optionally, additionally or alternatively, each increment of the stepwise increments of the voltage levels respectively at the plurality of fourth sub-electrodes 63 is decreased from the central most sub-electrode 631 of the plurality of fourth sub-electrodes 63 to the outermost sub-electrodes of the plurality of fourth sub-electrodes 63 on two sides, respectively. Subsequently, one or a combination of the first curvature of the first liquid crystal lens 50 and the second curvature of the second liquid crystal lens 70 are decreased. Optionally, each increment of the stepwise increments of the voltage levels respectively at the plurality of second sub-electrodes 43 are symmetrically decreased from the central most sub-electrode 431 of the plurality of second sub-electrodes 43 to the outermost sub-electrodes of the plurality of second sub-electrodes 43 on two sides, respectively. Optionally, additionally or alternatively, each increment of the stepwise increments of the voltage levels respectively at the plurality of fourth sub-electrodes 63 is symmetrically increased from the central most sub-electrode 631 of the plurality of fourth sub-electrodes 63 to the outermost sub-electrodes of the plurality of fourth sub-electrodes 63 on two sides, respectively. Optionally, the first liquid crystal lens 50 is symmetrical. The second liquid crystal lens 70 is symmetrical. In one example, referring to FIG. 13, a voltage level of the fourth sub-electrode 1 (at position labeled 'A') of the plurality of fourth sub-electrodes 63 is 10V. A voltage level of the fourth sub-electrode 2 (at position labeled 'B')of the plurality of fourth sub-electrodes 63 is 5V. A voltage level of the fourth sub-electrode 3 (at position labeled 'C')of the plurality of fourth sub-electrodes 63 is 0. A voltage level of the fourth sub-electrode 4 (at position labeled 'D') of the plurality of fourth sub-electrodes 63 is 5V. A voltage level of the fourth sub-electrode 5 (at position labeled 'E') of the plurality of fourth sub-electrodes 63 is 10V. When the grayscale of the one of the plurality of subpixels is decreased, the voltage level of the fourth sub-electrode 1 of the plurality of fourth sub-electrodes 63 is decreased to 7 V, the voltage level of the fourth sub-electrode 2 of the plurality of fourth sub-electrodes 63 is decreased to 4V, the voltage level of the fourth sub-electrode 3 of the plurality of fourth sub-electrodes 63 is 0, the voltage level of the fourth sub-electrode 4 of the plurality of fourth sub-electrodes 63 is decreased to 4V, and the voltage level of the fourth sub-electrode 5 of the plurality of fourth sub-electrodes 63 is decreased to 7V.

In some embodiments, increasing the grayscale of one of the plurality of subpixels comprises increasing each increment of the stepwise increments of the voltage levels respectively at the plurality of second sub-electrodes 43 from the central most sub-electrode 431 of the plurality of second sub-electrodes 43 to outermost sub-electrodes of the plurality of second sub-electrodes on two sides, respectively. Optionally, increasing the grayscale of the one of the plurality of subpixels comprises increasing each increment of the stepwise increments of the voltage levels respectively at the plurality of fourth sub-electrodes 63 from the central most sub-electrode 631 of the plurality of fourth sub-electrodes 63 to outermost sub-electrodes of the plurality of fourth sub-electrodes on two sides, respectively. Subsequently, one or a combination of the first curvature of the first liquid crystal lens 50 and the second curvature of the second liquid crystal lens 70 are increased, but one or a combination of the diameter L1 of the first liquid crystal lens 50 and the diameter L2 of the second liquid crystal lens 70 are unchanged. Optionally, the focal point of the first liquid crystal lens 50 still remains to coincide with the focal point of the second liquid crystal lens 70.

FIG. 15 is a schematic diagram illustrating a structure of a display panel having a plurality of subpixels in some embodiments according to the present disclosure. Referring to FIG. 15, when a negative voltage is applied to the plurality of first electrode groups 40 respectively in the plurality of subpixels, the focal point of the first liquid crystal lens 50 is a virtual focal point. The virtual focal point is to be formed a side of the first liquid crystal lens 50 distal to the second liquid crystal lens 70. The focal length of the first liquid crystal lens 50 is f1", and the focal length of the second liquid crystal lens 70 is f2". Methods of driving a display panel having a plurality of subpixels herein are mentioned above.

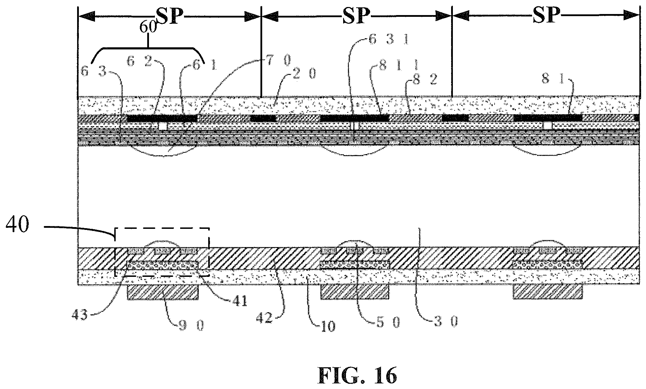

FIG. 16 is a schematic diagram illustrating a structure of a display panel having a plurality of subpixels in some embodiments according to the present disclosure. Referring to FIG. 16, in some embodiments, when the display mode is the dark state display mode L0, the orthographic projection of the part 811 of the black matrix 81 at the central position with respect to the N numbers of color filter blocks of the plurality of color filter blocks 821 on the second base substrate 20 covers an orthographic projection of the second liquid crystal lens 70 on the second base substrate 20 by changing one or a combination of the first voltage level and the second voltage level, thereby changing one or a combination of the diameter L1 of the first liquid crystal lens 50 and the diameter L2 of the second liquid crystal lens 70. All the incident light converged by the second liquid crystal lens 70 is transmitted to and absorbed by the part 811 of the black matrix 81. Therefore, the dark state of the display panel is performed. Optionally, no voltage is applied on both the plurality of first electrode groups 40 respectively in the plurality of subpixels and the plurality of second electrode groups 60 respectively in the plurality of subpixels, the first liquid crystal lens 50 and the second liquid crystal lens 70 are not induced, therefore, the dark state of the display panel is performed. In some embodiments, one or a combination of the first voltage level and the second voltage level are decreased lens in a same subpixel of the plurality of subpixel, one or a combination of a first curvature of the first liquid crystal lens 50 and a second curvature of the second liquid crystal lens 70 in a same subpixel of the plurality of subpixel are decreased such that the both of the first liquid crystal lens 50 and the second liquid crystal lens 70 gradually become flatten until the both of the first liquid crystal lens 50 and the second liquid crystal lens 70 disappear. Therefore, the dark state of the display panel is performed.

The foregoing description of the embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to explain the principles of the invention and its best mode practical application, thereby to enable persons skilled in the art to understand the invention for various embodiments and with various modifications as are suited to the particular use or implementation contemplated. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A display panel having a plurality of subpixels, comprising:
a first base substrate (10);
a second base substrate (20) facing the first base substrate (10);
a liquid crystal layer (30) between the first base substrate (10) and the second base substrate (20);
a plurality of first electrode groups (40) respectively in the plurality of subpixels and on a side of the first base substrate (10) facing the liquid crystal layer (30), and configured to generate a first fringe electric field (FF1) to form a first liquid crystal lens (50) in a respective one of the plurality of subpixels in the liquid crystal layer (30); and
a plurality of second electrode groups (60) respectively in the plurality of subpixels and on a side of the second base substrate (20) facing the liquid crystal layer (30), and configured to generate a second fringe electric field (FF2) to form a second liquid crystal lens (70) in a respective one of the plurality of subpixels in the liquid crystal layer (30),
the display panel further **characterised by** comprising a black matrix (81) defining a plurality of second apertures (812); and
a color filter (82) between the second base substrate (20) and the plurality of second electrode groups (60), and comprising a plurality of color filter blocks (821) respectively in the plurality of second apertures (812),
wherein an orthographic projection of the second liquid crystal lens (70) in each of the plurality of subpixels on the second base substrate (20) covers orthographic projections of N numbers of color filter blocks of the plurality of color filter blocks (821), N is an even integer.

2. The display panel of claim 1, wherein the first liquid crystal lens (50) in the respective one of the plurality of subpixels is a convex lens protruding along a direction from the first base substrate (10) to the second base substrate (20); and the second liquid crystal lens (70) in the respective one of the plurality of subpixels is a convex lens protruding along a direction from the second base substrate (20) to the first base substrate (10); or
an orthographic projection of the second liquid crystal lens (70) on the first base substrate (10) covers an orthographic projection of the first liquid crystal lens (50) on the first base substrate (10).

3. The display panel of claim 1, wherein a main optical axis (51) of the first liquid crystal lens (50) and a main optical axis (71) of the second liquid crystal lens (70) are co-linear.

4. The display panel of any one of claims 1 to 3, wherein each of the plurality of first electrode groups (40) in a respective one of the plurality of subpixels comprises:
a first sub-electrode (41) on a side of the first base substrate (10) facing the liquid crystal layer (30);
a first insulating layer (42) on a side of the first sub-electrode (41) distal to the first base substrate (10); and
a plurality of second sub-electrodes (43) on a side of the first insulating layer (42) distal to the first sub-electrode (41);
wherein each of the plurality of second electrode groups (60) in the respective one of the plurality of subpixels comprises:
a third sub-electrode (61) on a side of the second base substrate (20) facing the liquid crystal layer (30);
a second insulating layer (62) on a side of the third sub-electrode (61) distal to the second base substrate (20); and
a plurality of fourth sub-electrodes (63) on a side of the second insulating layer (62) distal to the third sub-electrode (61);
wherein an orthographic projection of the first sub-electrode (41) on the first base substrate (10) substantially covers orthographic projections of the plurality of second sub-electrodes (43) on the first base substrate (10); and
an orthographic projection of the third sub-electrode (61) on the second base substrate (20) substantially covers orthographic projections of the plurality of fourth sub-electrodes (63) on the second base substrate (20),
wherein a total number of the plurality of second sub-electrodes (43) in each of the plurality of subpixels is an odd number; and a total number of the plurality of fourth sub-electrodes (63) in each of the plurality of subpixels is an odd number.

5. The display panel of claim 4, wherein the display panel has a first aperture (611) extending through the third sub-electrode (61) in each of the plurality of subpixels; and an orthographic projection of a central most sub-electrode (631) of the plurality of fourth sub-electrodes (63) on the third sub-electrode (61) covers the first aperture (611).

6. The display panel of claim 5, wherein
an orthographic projection of a part (811) of the black matrix (81) at a central position with respect to the N numbers of color filter blocks of the plurality of color filter blocks (821) on the second base substrate (20) covers an orthographic projection of the central most sub-electrode (631) of the plurality of fourth sub-electrodes (63) on the second base substrate (20).

7. The display panel of claim 6, further comprising a light collimator (90) on a side of the liquid crystal layer (30) distal to the second base substrate (20), and configure to collimate incident light into substantially collimated light;
wherein the orthographic projection of the part (811) of the black matrix (81) at the central position with respect to the N numbers of color filter blocks of the plurality of color filter blocks (821) on the first base substrate (10) covers an orthographic projection of the light collimator (90) on the first base substrate (10).

8. The display panel of any one of claims 1 to 7, wherein a ratio of a diameter (L2) of the second liquid crystal lens (70) to a diameter (L1) of the first liquid crystal lens (50) is in a range of 6:1 to 3:1;

9. A display apparatus, comprising the display panel of any one of claims 1 to 8, and one or more integrated driving circuits.

10. A method of driving a display panel having a plurality of subpixels,
wherein the display panel comprises a first base substrate (10); a second base substrate (20) facing the first base substrate (10); and a liquid crystal layer (30) between the first base substrate (10) and the second base substrate (20);
the method comprises:
generating a first fringe electric field (FF1) to form a first liquid crystal lens (50) in each of the plurality of subpixels in the liquid crystal layer (30) by applying a first voltage level to a plurality of first electrode groups (40) respectively in the plurality of subpixels and on a side of the first base substrate (10) facing the liquid crystal layer (30); and
generating a second fringe electric field (FF2) to form a second liquid crystal lens (70) in each of the plurality of subpixels in the liquid crystal layer (30) by applying a second voltage level to a plurality of second electrode groups (60) respectively in the plurality of subpixels and on a side of the second base substrate (20) facing the liquid crystal layer (30),
**characterised in that**
the display panel further comprises a black matrix (81) defining a plurality of second apertures (812); and
a color filter (82) between the second base substrate (20) and the plurality of second electrode groups (60), and comprising a plurality of color filter blocks (821) respectively in the plurality of second apertures (812),
wherein an orthographic projection of the second liquid crystal lens (70) in each of the plurality of subpixels on the second base substrate (20) covers orthographic projections of N numbers of color filter blocks of the plurality of color filter blocks (821), N is an even integer.

11. The method of claim 10, further comprising adjusting a grayscale of one of the plurality of subpixels by changing one or a combination of the first voltage level and the second voltage level, thereby changing one or a combination of a first curvature of the first liquid crystal lens (50) and a second curvature of the second liquid crystal lens (70) in a same subpixel of the plurality of subpixels.

12. The method of claim 11, wherein focal points of the first liquid crystal lens (50) and the second liquid crystal lens (70) are maintained coincided during adjusting the grayscale.

13. The method of claim 11, wherein each of the plurality of first electrode groups (40) in a respective one of the plurality of subpixels comprises:
a first sub-electrode (41) on a side of the first base substrate (10) facing the liquid crystal layer (30);
a first insulating layer (42) on a side of the first sub-electrode (41) distal to the first base substrate (10); and
a plurality of second sub-electrodes (43) on a side of the first insulating layer (42) distal to the first sub-electrode (41);
wherein each of the plurality of second electrode groups (60) in the respective one of the plurality of subpixels comprises:
a third sub-electrode (61) on a side of the second base substrate (20) facing the liquid crystal layer (30);
a second insulating layer (62) on a side of the third sub-electrode (61) distal to the second base substrate (20); and
a plurality of fourth sub-electrodes (63) on a side of the second insulating layer (62) distal to the third sub-electrode (61);
wherein an orthographic projection of the first sub-electrode (41) on the first base substrate (10) substantially covers orthographic projections of the plurality of second sub-electrodes (43) on the first base substrate (10); and
an orthographic projection of the third sub-electrode (61) on the second base substrate (20) substantially covers orthographic projections of the plurality of fourth sub-electrodes (63) on the second base substrate (20);
wherein a voltage level at the first sub-electrode (41) is maintained substantially same as a voltage level at a central most sub-electrode (431) of the plurality of second sub-electrodes (43);
a voltage level at the third sub-electrode (61) is maintained substantially same as a voltage level at a central most sub-electrode (631) of the plurality of fourth sub-electrodes (63);
voltage levels respectively at the plurality of second sub-electrodes (43) increase, in stepwise increments, from the central most sub-electrode (431) of the plurality of second sub-electrodes (43) to outermost sub-electrodes of the plurality of second sub-electrodes (43) on two sides, respectively; and
voltage levels respectively at the plurality of fourth sub-electrodes (63) increase, in stepwise increments, from the central most sub-electrode (631) of the plurality of fourth sub-electrodes (63) to outermost sub-electrodes of the plurality of fourth sub-electrodes (63) on two sides, respectively.

14. The method of claim 13, wherein adjusting the grayscale comprises:
increasing the grayscale of the one of the plurality of subpixels by increasing each increment of the stepwise increments of the voltage levels respectively at the plurality of second sub-electrodes (43) from the central most sub-electrode (431) of the plurality of second sub-electrodes (43) to the outermost sub-electrodes of the plurality of second sub-electrodes (43) on two sides, respectively; or
increasing the grayscale of the one of the plurality of subpixels by increasing each increment of the stepwise increments of the voltage levels respectively at the plurality of fourth sub-electrodes (63) from the central most sub-electrode (631) of the plurality of fourth sub-electrodes (63) to the outermost sub-electrodes of the plurality of fourth sub-electrodes (63) on two sides, respectively; or
decreasing the grayscale of the one of the plurality of subpixels by decreasing each increment of the stepwise increments of the voltage levels respectively at the plurality of second sub-electrodes (43) from the central most sub-electrode (431) of the plurality of second sub-electrodes (43) to the outermost sub-electrodes of the plurality of second sub-electrodes (43) on two sides, respectively; or
decreasing the grayscale of the one of the plurality of subpixels by decreasing each increment of the stepwise increments of the voltage levels respectively at the plurality of fourth sub-electrodes (63) from the central most sub-electrode (631) of the plurality of fourth sub-electrodes (63) to the outermost sub-electrodes of the plurality of fourth sub-electrodes (63) on two sides, respectively.

15. The method of claim 13, wherein voltage levels of the central most sub-electrode (431) of the plurality of second sub-electrodes (43) and the central most sub-electrode (631) of the plurality of fourth sub-electrodes (63) in the respective one of the plurality of subpixels are substantially same.

## Patentansprüche

1. Anzeigetafel mit einer Vielzahl von Subpixeln, umfassend:
ein erstes Basissubstrat (10);
ein zweites Basissubstrat (20), das dem ersten Basissubstrat (10) gegenüberliegt;
eine Flüssigkristallschicht (30) zwischen dem ersten Basissubstrat (10) und dem zweiten Basissubstrat (20);
eine Vielzahl von ersten Elektrodengruppen (40) jeweils in der Vielzahl von Subpixeln und auf einer Seite des der Flüssigkristallschicht (30) zugewandten ersten Basissubstrats (10) und die dazu ausgelegt ist, ein erstes elektrisches Randfeld (FF1) zu erzeugen, um eine erste Flüssigkristalllinse (50) in einem jeweiligen der Vielzahl von Subpixeln in der Flüssigkristallschicht (30) zu bilden; und
eine Vielzahl von zweiten Elektrodengruppen (60) jeweils in der Vielzahl von Subpixeln und auf einer Seite des der Flüssigkristallschicht (30) zugewandten zweiten Basissubstrats (20) und die dazu ausgelegt ist, ein zweites elektrisches Randfeld (FF2) zu erzeugen, um eine zweite Flüssigkristalllinse (70) in einem jeweiligen der Vielzahl von Subpixeln in der Flüssigkristallschicht (30) zu bilden, wobei die Anzeigetafel ferner **dadurch gekennzeichnet ist, dass** sie eine Schwarzmatrix (81) umfasst, die eine Vielzahl von zweiten Öffnungen (812) definieren; und
einen Farbfilter (82) zwischen dem zweiten Basissubstrat (20) und der Vielzahl von zweiten Elektrodengruppen (60) und umfassend eine Vielzahl von Farbfilterblöcken (821) jeweils in der Vielzahl von zweiten Öffnungen (812),
wobei eine Orthogonalprojektion der zweiten Flüssigkristalllinse (70) in jedem der Vielzahl von Subpixeln auf dem zweiten Basissubstrat (20) Orthogonalprojektionen von N Farbfilterblöcken der Vielzahl von Farbfilterblöcken (821) abdeckt, wobei N eine gerade ganze Zahl ist.

2. Anzeigetafel gemäß Anspruch 1, wobei die erste Flüssigkristalllinse (50) in dem jeweiligen der Vielzahl von Subpixeln eine konvexe Linse ist, die entlang einer Richtung von dem ersten Basissubstrat (10) zu dem zweiten Basissubstrat (20) vorsteht; und die zweite Flüssigkristalllinse (70) in dem jeweiligen der Vielzahl von Subpixeln eine konvexe Linse ist, die entlang einer Richtung von dem zweiten Basissubstrat (20) zu dem ersten Basissubstrat (10) vorsteht; oder
eine Orthogonalprojektion der zweiten Flüssigkristalllinse (70) auf dem ersten Basissubstrat (10) eine Orthogonalprojektion der ersten Flüssigkristalllinse (50) auf dem ersten Basissubstrat (10) abdeckt.

3. Anzeigetafel gemäß Anspruch 1, wobei eine optische Hauptachse (51) der ersten Flüssigkristalllinse (50) und eine optische Hauptachse (71) der zweiten Flüssigkristalllinse (70) kolinear sind.

4. Anzeigetafel gemäß einem der Ansprüche 1 bis 3, wobei jede der Vielzahl von ersten Elektrodengruppen (40) in einem jeweiligen der Vielzahl von Subpixeln umfasst:
eine erste Subelektrode (41) auf einer der Flüssigkristallschicht (30) zugewandten Seite des ersten Basissubstrats (10);
eine erste Isolierschicht (42) auf einer Seite der ersten Subelektrode (41) nahe dem ersten Basissubstrat (10); und
eine Vielzahl von zweiten Subelektroden (43) auf einer Seite der ersten Isolierschicht (42) fern von der ersten Subelektrode (41);
wobei jede der Vielzahl von zweiten Elektrodengruppen (60) in dem jeweiligen der Vielzahl von Subpixeln umfasst:
eine dritte Subelektrode (61) auf einer der Flüssigkristallschicht (30) zugewandten Seite des zweiten Basissubstrats (20);
eine zweite Isolierschicht (62) auf einer Seite der dritten Subelektrode (61) fern von dem zweiten Basissubstrat (20); und
eine Vielzahl von vierten Subelektroden (63) auf einer Seite der zweiten Isolierschicht (62) fern von der dritten Subelektrode (61);
wobei eine Orthogonalprojektion der ersten Subelektrode (41) auf dem ersten Basissubstrat (10) im Wesentlichen Orthogonalprojektionen der Vielzahl von zweiten Subelektroden (43) auf dem ersten Basissubstrat (10) abdeckt; und
eine Orthogonalprojektion der dritten Subelektrode (61) auf dem zweiten Basissubstrat (20) im Wesentlichen die Orthogonalprojektion der Vielzahl von vierten Subelektroden (63) auf dem zweiten Basissubstrat (20) abdeckt,
wobei eine Gesamtzahl der Vielzahl von zweiten Subelektroden (43) in jedem der Vielzahl von Unterpixeln eine ungerade Zahl ist und eine Gesamtzahl der Vielzahl von vierten Subelektroden (63) in jedem der Vielzahl von Unterpixeln eine ungerade Zahl ist.

5. Anzeigetafel gemäß Anspruch 4, wobei die Anzeigetafel eine erste Öffnung (611) aufweist, die sich durch die dritte Subelektrode (61) in jedem der Vielzahl von Unterpixeln erstreckt, und eine Orthogonalprojektion einer mittigsten Subelektrode (631) der Vielzahl von vierten Subelektroden (63) auf der dritten Subelektrode (61) die erste Öffnung (611) abdeckt.

6. Anzeigetafel gemäß Anspruch 5, wobei eine Orthogonalprojektion eines Teils (811) der Schwarzmatrix (81) an einer mittigen Position in Bezug auf die N Farbfilterblöcke der Vielzahl von Farbfilterblöcken (821) auf das zweite Basissubstrat (20) eine Orthogonalprojektion der mittigsten Subelektrode (631) der Vielzahl von vierten Subelektroden (63) auf dem zweiten Basissubstrat (20) abdeckt.

7. Anzeigetafel gemäß Anspruch 6, ferner umfassend einen Lichtkollimator (90) auf einer Seite der Flüssigkristallschicht (30) fern von dem zweiten Basissubstrat (20), der dazu ausgelegt ist, einfallendes Licht in im Wesentlichen kollimiertes Licht zu kollimieren;
wobei die Orthogonalprojektion des Teils (811) der Schwarzmatrix (81) an der mittigen Position in Bezug auf die N Farbfilterblöcke der Vielzahl von Farbfilterblöcken (821) auf dem ersten Basissubstrat (10) eine Orthogonalprojektion des Lichtkollimators (90) auf dem ersten Basissubstrat (10) abdeckt.

8. Anzeigetafel gemäß einem der Ansprüche 1 bis 7, wobei das Verhältnis eines Durchmessers (L2) der zweiten Flüssigkristalllinse (70) zu einem Durchmesser (L1) der ersten Flüssigkristalllinse (50) im Bereich von 6:1 bis 3:1 liegt;

9. Anzeigevorrichtung, umfassend die Anzeigetafel gemäß einem der Ansprüche 1 bis 8 und eine oder mehrere integrierte Ansteuerschaltungen.

10. Verfahren zum Ansteuern einer Anzeigetafel mit einer Vielzahl von Subpixeln,
wobei die Anzeigetafel ein erstes Basissubstrat (10), ein dem ersten Basissubstrat (10) gegenüberliegendes zweites Basissubstrat (20) und eine Flüssigkristallschicht (30) zwischen dem ersten Basissubstrat (10) und dem zweiten Basissubstrat (20) umfasst;
wobei das Verfahren umfasst:
Erzeugen eines ersten elektrischen Randfeldes (FF1), um eine erste Flüssigkristalllinse (50) in jedem der Vielzahl von Subpixeln in der Flüssigkristallschicht (30) durch Anlegen eines ersten Spannungspegels an eine Vielzahl von ersten Elektrodengruppen (40) jeweils in der Vielzahl von Subpixeln und auf einer der Flüssigkristallschicht (30) zugewandten Seite des ersten Basissubstrats (10) zu bilden; und
Erzeugen eines zweiten elektrischen Randfeldes (FF2), um eine zweite Flüssigkristalllinse (70) in jedem der Vielzahl von Subpixeln in der Flüssigkristallschicht (30) durch Anlegen eines zweiten Spannungspegels an eine Vielzahl von zweiten Elektrodengruppen (60) jeweils in der Vielzahl von Subpixeln und auf einer der Flüssigkristallschicht (30) zugewandten Seite des zweiten Basissubstrats (20) zu bilden,
**dadurch gekennzeichnet, dass**
die Anzeigetafel ferner eine Schwarzmatrix (81) umfasst, die eine Vielzahl von zweiten Öffnungen (812) definiert; und
einen Farbfilter (82) zwischen dem zweiten Basissubstrat (20) und der Vielzahl von zweiten Elektrodengruppen (60) und umfassend eine Vielzahl von Farbfilterblöcken (821) jeweils in der Vielzahl von zweiten Öffnungen (812),
wobei eine Orthogonalprojektion der zweiten Flüssigkristalllinse (70) in jedem der Vielzahl von Subpixeln auf dem zweiten Basissubstrat (20) Orthogonalprojektionen von N Farbfilterblöcken der Vielzahl von Farbfilterblöcken (821) abdeckt, wobei N eine gerade ganze Zahl ist.

11. Verfahren gemäß Anspruch 10, ferner umfassend das Einstellen einer Grauskala eines der Vielzahl von Subpixeln durch Ändern eines oder einer Kombination des ersten Spannungspegels und des zweiten Spannungspegels, wodurch eine oder eine Kombination einer ersten Krümmung der ersten Flüssigkristalllinse (50) und einer zweiten Krümmung der zweiten Flüssigkristalllinse (70) in einem gleichen Subpixel der Vielzahl von Subpixeln geändert wird.

12. Verfahren gemäß Anspruch 11, wobei die Brennpunkte der ersten Flüssigkristalllinse (50) und der zweiten Flüssigkristalllinse (70) während der Einstellung der Grauskala in Übereinstimmung gehalten werden.

13. Verfahren gemäß Anspruch 11, wobei jede der Vielzahl von ersten Elektrodengruppen (40) in einem jeweiligen der Vielzahl von Subpixeln umfasst:
eine erste Subelektrode (41) auf einer der Flüssigkristallschicht (30) zugewandten Seite des ersten Basissubstrats (10);
eine erste Isolierschicht (42) auf einer Seite der ersten Subelektrode (41) nahe dem ersten Basissubstrat (10); und
eine Vielzahl von zweiten Subelektroden (43) auf einer Seite der ersten Isolierschicht (42) fern von der ersten Subelektrode (41);
wobei jede der Vielzahl von zweiten Elektrodengruppen (60) in dem jeweiligen der Vielzahl von Subpixeln umfasst:
eine dritte Subelektrode (61) auf einer der Flüssigkristallschicht (30) zugewandten Seite des zweiten Basissubstrats (20);
eine zweite Isolierschicht (62) auf einer Seite der dritten Subelektrode (61) fern von dem zweiten Basissubstrat (20); und
eine Vielzahl von vierten Subelektroden (63) auf einer Seite der zweiten Isolierschicht (62) fern von der dritten Subelektrode (61);
wobei eine Orthogonalprojektion der ersten Subelektrode (41) auf dem ersten Basissubstrat (10) im Wesentlichen Orthogonalprojektionen der Vielzahl von zweiten Subelektroden (43) auf dem ersten Basissubstrat (10) abdeckt; und
eine Orthogonalprojektion der dritten Subelektrode (61) auf dem zweiten Basissubstrat (20) im Wesentlichen die Orthogonalprojektion der Vielzahl von vierten Subelektroden (63) auf dem zweiten Basissubstrat (20) abdeckt,
wobei ein Spannungspegel an der ersten Subelektrode (41) im Wesentlichen gleich wie ein Spannungspegel an einer mittleren Subelektrode (431) der Vielzahl von zweiten Subelektroden (43) gehalten wird;
ein Spannungspegel an der dritten Subelektrode (61) im Wesentlichen gleich wie ein Spannungspegel an einer mittigsten Subelektrode (631) der Vielzahl von vierten Subelektroden (63) gehalten wird;
Spannungspegel jeweils an der Vielzahl von zweiten Subelektroden (43) in schrittweisen Inkrementen von der mittigsten Subelektrode (431) der Vielzahl von zweiten Subelektroden (43) zu den äußersten Subelektroden der Vielzahl von zweiten Subelektroden (43) jeweils auf zwei Seiten ansteigen; und
Spannungspegel jeweils an der Vielzahl von vierten Subelektroden (63) in schrittweisen Inkrementen von der mittigsten Subelektrode (631) der Vielzahl von vierten Subelektroden (63) zu den äußersten Subelektroden der Vielzahl von vierten Subelektroden (63) jeweils auf zwei Seiten ansteigen.

14. Verfahren gemäß Anspruch 13, wobei das Einstellen der Grauskala umfasst:
Vergrößern der Grauskala des einen der Vielzahl von Subpixeln durch Vergrößern jedes Inkrements der schrittweisen Inkremente der Spannungspegel jeweils an der Vielzahl von zweiten Subelektroden (43) von der mittigsten Subelektrode (431) der Vielzahl von zweiten Subelektroden (43) zu den äußersten Subelektroden der Vielzahl von zweiten Subelektroden (43) auf jeweils zwei Seiten; oder
Vergrößern der Grauskala des einen der Vielzahl von Subpixeln durch Vergrößern jedes Inkrements der schrittweisen Inkremente der Spannungspegel jeweils an der Vielzahl von vierten Subelektroden (63) von der mittigsten Subelektrode (631) der Vielzahl von vierten Subelektroden (63) zu den äußersten Subelektroden der Vielzahl von vierten Subelektroden (63) auf jeweils zwei Seiten; oder
Verkleinern der Grauskala des einen der Vielzahl von Subpixeln durch Verkleinern jedes Inkrements der schrittweisen Inkremente der Spannungspegel jeweils an der Vielzahl von zweiten Subelektroden (43) von der mittigsten Subelektrode (431) der Vielzahl von zweiten Subelektroden (43) zu den äußersten Subelektroden der Vielzahl von zweiten Subelektroden (43) auf jeweils zwei Seiten; oder
Verkleinern der Grauskala des einen der Vielzahl von Subpixeln durch Verkleinern jedes Inkrements der schrittweisen Inkremente der Spannungspegel jeweils an der Vielzahl von vierten Subelektroden (63) von der mittigsten Subelektrode (631) der Vielzahl von vierten Subelektroden (63) zu den äußersten Subelektroden der Vielzahl von vierten Subelektroden (63) auf jeweils zwei Seiten.

15. Verfahren gemäß Anspruch 13, wobei die Spannungspegel der mittigsten Subelektrode (431) der Vielzahl von zweiten Subelektroden (43) und der mittigsten Subelektrode (631) der Vielzahl von vierten Subelektroden (63) in der jeweiligen der Vielzahl von Subpixeln im Wesentlichen gleich sind.

## Revendications

1. Panneau d'affichage comportant une pluralité de sous-pixels, comprenant :
un premier substrat de base (10) ;
un deuxième substrat de base (20) en regard du premier substrat de base (10) ;
une couche de cristaux liquides (30) entre le premier substrat de base (10) et le deuxième substrat de base (20) ;
une pluralité de premiers groupes d'électrodes (40) situés respectivement dans la pluralité de sous-pixels et sur une face du premier substrat de base (10) en regard de la couche de cristaux liquides (30), et configurés pour générer un premier champ électrique de frange (FF1) pour former une première lentille à cristaux liquides (50) dans un sous-pixel respectif de la pluralité de sous-pixels dans la couche de cristaux liquides (30) ; et
une pluralité de deuxièmes groupes d'électrodes (60) situés respectivement dans la pluralité de sous-pixels et sur une face du deuxième substrat de base (20) en regard de la couche de cristaux liquides (30), et configurés pour générer un deuxième champ électrique de frange (FF2) pour former une deuxième lentille à cristaux liquides (70) dans un sous-pixel respectif de la pluralité de sous-pixels dans la couche de cristaux liquides (30),
le panneau d'affichage étant en outre **caractérisé en ce qu'**il
comprend une matrice noire (81) définissant une pluralité de deuxièmes ouvertures (812) ; et
un filtre de couleur (82) situé entre le deuxième substrat de base (20) et la pluralité de deuxièmes groupes d'électrodes (60), et comprenant une pluralité de blocs de filtres de couleur (821) respectivement dans la pluralité de deuxièmes ouvertures (812),
une projection orthographique de la deuxième lentille à cristaux liquides (70) dans chaque sous-pixel de la pluralité de sous-pixels sur le deuxième substrat de base (20) recouvrant des projections orthographiques de nombres N de blocs de filtres de couleur de la pluralité de blocs de filtres de couleur (821), N étant un entier pair.

2. Panneau d'affichage selon la revendication 1, dans lequel la première lentille à cristaux liquides (50) dans ledit sous-pixel respectif de la pluralité de sous-pixels est une lentille convexe faisant saillie dans une direction allant du premier substrat de base (10) au deuxième substrat de base (20) ; et la deuxième lentille à cristaux liquides (70) dans ledit sous-pixel respectif de la pluralité de sous-pixels est une lentille convexe faisant saillie dans une direction allant du deuxième substrat de base (20) au premier substrat de base (10) ; ou
une projection orthographique de la deuxième lentille à cristaux liquides (70) sur le premier substrat de base (10) recouvrant une projection orthographique de la première lentille à cristaux liquides (50) sur le premier substrat de base (10).

3. Panneau d'affichage selon la revendication 1, dans lequel un axe optique principal (51) de la première lentille à cristaux liquides (50) et un axe optique principal (71) de la deuxième lentille à cristaux liquides (70) sont colinéaires.

4. Panneau d'affichage selon l'une quelconque des revendications 1 à 3, dans lequel chaque groupe de la pluralité de premiers groupes d'électrodes (40) dans un sous-pixel respectif de la pluralité de sous-pixels comprend :
une première sous-électrode (41) sur une face du premier substrat de base (10) en regard de la couche de cristaux liquides (30) ;
une première couche isolante (42) sur une face de la première sous-électrode (41) distale par rapport au premier substrat de base (10) ; et
une pluralité de deuxièmes sous-électrodes (43) sur une face de la première couche isolante (42) distale par rapport à la première sous-électrode (41) ;
dans lequel chaque groupe de la pluralité de deuxièmes groupes d'électrodes (60) dans ledit sous-pixel respectif de la pluralité de sous-pixels comprend :
une troisième sous-électrode (61) sur une face du deuxième substrat de base (20) en regard de la couche de cristaux liquides (30) ;
une deuxième couche isolante (62) sur une face de la troisième sous-électrode (61) distale par rapport au deuxième substrat de base (20) ; et
une pluralité de quatrièmes sous-électrodes (63) sur une face de la deuxième couche isolante (62) distale par rapport à la troisième sous-électrode (61) ;
une projection orthographique de la première sous-électrode (41) sur le premier substrat de base (10) recouvrant essentiellement des projections orthographiques de la pluralité de deuxièmes sous-électrodes (43) sur le premier substrat de base (10) ; et
une projection orthographique de la troisième sous-électrode (61) sur le deuxième substrat de base (20) recouvrant essentiellement des projections orthographiques de la pluralité de quatrièmes sous-électrodes (63) sur le deuxième substrat de base (20),
un nombre total de la pluralité de deuxièmes sous-électrodes (43) dans chaque sous-pixel de la pluralité de sous-pixels étant un nombre impair ; et un nombre total de la pluralité de quatrièmes sous-électrodes (63) dans chaque sous-pixel de la pluralité de sous-pixels étant un nombre impair.

5. Panneau d'affichage selon la revendication 4, dans lequel le panneau d'affichage a une première ouverture (611) s'étendant à travers la troisième sous-électrode (61) dans chaque sous-pixel de la pluralité de sous-pixels ; et une projection orthographique de la sous-électrode la plus au centre (631) de la pluralité de quatrièmes sous-électrodes (63) sur la troisième sous-électrode (61) recouvre la première ouverture (611).

6. Panneau d'affichage selon la revendication 5, dans lequel
une projection orthographique d'une partie (811) de la matrice noire (81) au niveau d'une position centrale par rapport aux nombres N de blocs de filtres de couleur de la pluralité de blocs de filtres de couleur (821) sur le deuxième substrat de base (20) recouvre une projection orthographique de la sous-électrode la plus au centre (631) de la pluralité de quatrièmes sous-électrodes (63) sur le deuxième substrat de base (20).

7. Panneau d'affichage selon la revendication 6, comprenant en outre un collimateur de lumière (90) situé sur une face de la couche de cristaux liquides (30) distale par rapport au deuxième substrat de base (20), et configuré pour collimater une lumière incidente en une lumière essentiellement collimatée ;
la projection orthographique de la partie (811) de la matrice noire (81) au niveau de la position centrale par rapport aux nombres N de blocs de filtres de couleur de la pluralité de blocs de filtres de couleur (821) sur le premier substrat de base (10) recouvrant une projection orthographique du collimateur de lumière (90) sur le premier substrat de base (10).

8. Panneau d'affichage selon l'une quelconque des revendications 1 à 7, dans lequel un rapport d'un diamètre (L2) de la deuxième lentille à cristaux liquides (70) sur un diamètre (L1) de la première lentille à cristaux liquides (50) est compris dans un intervalle de 6:1 à 3:1.

9. Dispositif d'affichage comprenant le panneau d'affichage selon l'une quelconque des revendications 1 à 8, et un ou plusieurs circuits intégrés de commande.

10. Procédé de commande d'un panneau d'affichage comportant une pluralité de sous-pixels,
le panneau d'affichage comprenant un premier substrat de base (10) ; un deuxième substrat de base (20) en regard du premier substrat de base (10) ; et une couche de cristaux liquides (30) entre le premier substrat de base (10) et le deuxième substrat de base (20) ;
le procédé comprenant :
la génération d'un premier champ électrique de frange (FF1) pour former une première lentille à cristaux liquides (50) dans chaque sous-pixel de la pluralité de sous-pixels dans la couche de cristaux liquides (30) par application d'un premier niveau de tension à une pluralité de premiers groupes d'électrodes (40) respectivement dans la pluralité de sous-pixels et sur une face du premier substrat de base (10) en regard de la couche de cristaux liquides (30) ; et
la génération d'un deuxième champ électrique de frange (FF2) pour former une deuxième lentille à cristaux liquides (70) dans chaque sous-pixel de la pluralité de sous-pixels dans la couche de cristaux liquides (30) par application d'un deuxième niveau de tension à une pluralité de deuxièmes groupes d'électrodes (60) respectivement dans la pluralité de sous-pixels et sur une face du deuxième substrat de base (20) en regard de la couche de cristaux liquides (30),
**caractérisé en ce que**
la panneau d'affichage comprend en outre une matrice noire (81) définissant une pluralité de deuxièmes ouvertures (812) ; et
un filtre de couleur (82) situé entre le deuxième substrat de base (20) et la pluralité de deuxièmes groupes d'électrodes (60), et comprenant une pluralité de blocs de filtres de couleur (821) respectivement dans la pluralité de deuxièmes ouvertures (812),
une projection orthographique de la deuxième lentille à cristaux liquides (70) dans chaque sous-pixel de la pluralité de sous-pixels sur le deuxième substrat de base (20) recouvrant des projections orthographiques de nombres N de blocs de filtres de couleur de la pluralité de blocs de filtres de couleur (821), N étant un entier pair.

11. Procédé selon la revendication 10, comprenant en outre le réglage des niveaux de gris d'un sous-pixel de la pluralité de sous-pixels par changement de l'un ou d'une combinaison du premier niveau de tension et du deuxième niveau de tension, en changeant ainsi l'une ou une combinaison d'une première courbure de la première lentille à cristaux liquides (50) et d'une deuxième courbure de la deuxième lentille à cristaux liquides (70) dans un même sous-pixel de la pluralité de sous-pixels.

12. Procédé selon la revendication 11, dans lequel les points focaux de la première lentille à cristaux liquides (50) et de la deuxième lentille à cristaux liquides (70) sont maintenus en coïncidence pendant le réglage des niveaux de gris.

13. Procédé selon la revendication 11, dans lequel chaque groupe de la pluralité de premiers groupes d'électrodes (40) dans un sous-pixel respectif de la pluralité de sous-pixels comprend :
une première sous-électrode (41) sur une face du premier substrat de base (10) en regard de la couche de cristaux liquides (30) ;
une première couche isolante (42) sur une face de la première sous-électrode (41) distale par rapport au premier substrat de base (10) ; et
une pluralité de deuxièmes sous-électrodes (43) sur une face de la première couche isolante (42) distale par rapport à la première sous-électrode (41) ;
dans lequel chaque groupe de la pluralité de deuxièmes groupes d'électrodes (60) dans le sous-pixel respectif de la pluralité de sous-pixels comprend :
une troisième sous-électrode (61) sur une face du deuxième substrat de base (20) en regard de la couche de cristaux liquides (30) ;
une deuxième couche isolante (62) sur une face de la troisième sous-électrode (61) distale par rapport au deuxième substrat de base (20) ; et
une pluralité de quatrièmes sous-électrodes (63) sur une face de la deuxième couche isolante (62) distale par rapport à la troisième sous-électrode (61) ;
une projection orthographique de la première sous-électrode (41) sur le premier substrat de base (10) recouvrant essentiellement des projections orthographiques de la pluralité de deuxièmes sous-électrodes (43) sur le premier substrat de base (10) ; et
une projection orthographique de la troisième sous-électrode (61) sur le deuxième substrat de base (20) recouvrant essentiellement des projections orthographiques de la pluralité de quatrièmes sous-électrodes (63) sur le deuxième substrat de base (20) ;
un niveau de tension au niveau de la première sous-électrode (41) étant maintenu essentiellement identique à un niveau de tension au niveau de la sous-électrode la plus au centre (431) de la pluralité de deuxièmes sous-électrodes (43) ;
un niveau de tension au niveau de la troisième sous-électrode (61) étant maintenu essentiellement identique à un niveau de tension au niveau de la sous-électrode la plus au centre (631) de la pluralité de quatrièmes sous-électrodes (63) ;
les niveaux de tensions respectifs au niveau de la pluralité de deuxièmes sous-électrodes (43) augmentant, par paliers, de la sous-électrode la plus au centre (431) de la pluralité de deuxièmes sous-électrodes (43) vers les sous-électrodes les plus à l'extérieur de la pluralité de deuxièmes sous-électrodes (43) sur respectivement les deux faces ; et
les niveaux de tensions respectifs au niveau de la pluralité de quatrièmes sous-électrodes (63) augmentant, par paliers, de la sous-électrode la plus au centre (631) de la pluralité de quatrièmes sous-électrodes (63) vers les sous-électrodes les plus à l'extérieur de la pluralité de quatrièmes sous-électrodes (63) sur respectivement les deux faces.

14. Procédé selon la revendication 13, dans lequel le réglage des niveaux de gris comprend :
l'augmentation des niveaux de gris dudit sous-pixel de la pluralité de sous-pixels par incrémentation de chacun des paliers des niveaux de tension respectifs au niveau de la pluralité de deuxièmes sous-électrodes (43), de la sous-électrode la plus au centre (431) de la pluralité de deuxièmes sous-électrodes (43) vers les sous-électrodes les plus à l'extérieur de la pluralité de deuxièmes sous-électrodes (43) sur respectivement les deux faces ; et
l'augmentation des niveaux de gris dudit sous-pixel de la pluralité de sous-pixels par incrémentation de chacun des paliers des niveaux de tension respectifs au niveau de la pluralité de quatrièmes sous-électrodes (63), de la sous-électrode la plus au centre (631) de la pluralité de quatrièmes sous-électrodes (63) vers les sous-électrodes les plus à l'extérieur de la pluralité de quatrièmes sous-électrodes (63) sur respectivement les deux faces ; ou
la réduction des niveaux de gris dudit sous-pixel de la pluralité de sous-pixels par décrémentation de chacun des paliers des niveaux de tension respectifs au niveau de la pluralité de deuxièmes sous-électrodes (43), de la sous-électrode la plus au centre (431) de la pluralité de deuxièmes sous-électrodes (43) vers les sous-électrodes les plus à l'extérieur de la pluralité de deuxièmes sous-électrodes (43) sur respectivement les deux faces ; ou
la réduction des niveaux de gris dudit sous-pixel de la pluralité de sous-pixels par décrémentation de chacun des paliers des niveaux de tension respectifs au niveau de la pluralité de quatrièmes sous-électrodes (63), de la sous-électrode la plus au centre (631) de la pluralité de quatrièmes sous-électrodes (63) vers les sous-électrodes les plus à l'extérieur de la pluralité de quatrièmes sous-électrodes (63) sur respectivement les deux faces.

15. Procédé selon la revendication 13, dans lequel les niveaux de tension de la sous-électrode la plus au centre (431) de la pluralité de deuxièmes sous-électrodes (43) et de la sous-électrodes la plus au centre (631) de la pluralité de quatrièmes sous-électrodes (63) dans le sous-pixel respectif de la pluralité de sous-pixels sont essentiellement identiques.
